# EUROPEAN PATENT SPECIFICATION

(11) **EP 3 471 971 B1**
(45) Date of publication and mention of the grant of the patent: **09.10.2019**
(21) Application number: 18740598.0
(22) Date of filing: 16.07.2018
(51) Int. Cl.: B60C 1/00, C08F 2/00, C08F 236/10, C08L 7/00, C08L 9/06

(54) **IN-SITU POLYMER BLEND FOR A TIRE**
IN-SITU-POLYMERMISCHUNG FÜR EINEN REIFEN
MÉLANGE POLYMÈRE IN SITU POUR PNEU

(30) Priority: 27.07.2017 EP 17183495
(43) Date of publication of application: 24.04.2019
(73) Proprietor: Trinseo Europe GmbH, 8810 Horgen (CH)
(72) Inventor: EBERT, Helgard, 06114 Halle (DE); HEIDENREICH, Daniel, 06110 Halle (DE); THIELE, Sven K. H., 06120 Halle (DE)
(74) Representative: Hoffmann Eitle
(86) International application number: PCT/EP2018/069234
(87) International publication number: WO 2019/020419

(56) References cited:
- EP-A1- 2 998 362
- EP-A1- 3 059 099
- US-B1- 7 321 017

## Description

The present invention relates to a method for the preparation of a synthetic rubber blend, wherein the blend comprises a high molecular weight diene polymer (A) having a number average molecular weight (Mn) of from 50.000 to 1.000.000 g/mol with a high trans content as well as a low molecular weight diene polymer (B) having a number average molecular weight (Mn) of from 250 to 10.000 g/mol. The present invention further relates to synthetic rubber blends that are obtainable according to the method described herein; as well as to rubber compositions comprising the blend and articles such as tires.

Synthetic rubbers with high trans content in the butadiene component are known to have good mechanical properties and have thus been used in tire formulations for trucks. Polymers with high trans content can *inter alia* be obtained by way of anionic polymerization.

In the past, there has been an increasing demand for providing polymer compositions for the production of tires for the automobile and truck industry with improved tire performance.

Prior art compositions, however, leave room for improvement as environmental aspects such as a reduction of fuel consumption and carbon dioxide emission (both being influenced by the rolling resistance of tires) and safety requirements (associated with grip performance and abrasion resistance) are undergoing more and more restrictions.

The present inventors have discovered that synthetic rubber blends that are obtainable by anionically polymerizing as described in the present independent claim 1,
i.e. by anionically polymerizing butadiene monomers and, optionally, one or more monomers selected from aromatic vinyl compounds, alpha olefins and further conjugated diene monomers in the presence of at least one polymerization initiator in an organic solvent, wherein the step of polymerizing the butadiene monomers and, optionally, the aromatic vinyl compounds, the alpha olefins and further conjugated diene monomers comprises: (i) a first stage of providing butadiene monomers and, optionally, aromatic vinyl compounds, alpha olefins and further conjugated diene monomers, and a first portion of a polymerization initiator comprising an organolithium compound, a group IIa metal salt, and an organoaluminum compound, and polymerizing the butadiene monomer up to a conversion rate of 80 %, preferably 90 %, to give a high molecular weight diene polymer (A), wherein 65% by weight or more of the butadiene monomers are incorporated into the polymer chains in the form of the trans isomer; and (ii) a subsequent second stage of adding a second portion of a polymerization initiator comprising at least an organolithium compound and polymerizing to obtain the blend of the high molecular weight diene polymer (A) and the low molecular weight diene polymer (B)
are associated with particularly good properties that allow the preparation of articles such as tires, preferably truck tires that are associated with improved product performance. These properties include a reduced DIN abrasion of the crosslinked polymer formulation,and relatively low tan δ at 60°C values while the tensile strength and elongation at break are maintained at a sufficient value.

### Summary of the Invention

In a first aspect, the present invention thereof relates to a method for the preparation of a synthetic rubber blend,
the blend comprising a high molecular weight diene polymer (A) derived from butadiene monomers and, optionally, alpha olefins and further conjugated diene monomers,
polymer (A) having 55-100 % by weight of units derived from butadiene monomers and 0-45 % by weight of units derived from aromatic vinyl compounds, alpha olefins and further conjugated diene monomers,
polymer (A) further having a number average molecular weight (Mn) of from 50.000 to 1.000.000 g/mol,
wherein 65 % by weight or more of the butadiene monomers are incorporated into the polymer chains in the form of the trans isomer;
and a low molecular weight diene polymer (B) having a number average molecular weight (Mn) of from 250 to 10.000 g/mol,
wherein the method comprises the following steps:
anionically polymerizing butadiene monomers and, optionally, one or more monomers selected from aromatic vinyl compounds, alpha olefins and further conjugated diene monomers in the presence of at least one polymerization initiator in an organic solvent, wherein the step of polymerizing the butadiene monomers and, optionally, the aromatic vinyl compounds, the alpha olefins and further conjugated diene monomers comprises: (i) a first stage of providing butadiene monomers and, optionally,
aromatic vinyl compounds, alpha olefins and further conjugated diene monomers, and a first portion of a polymerization initiator comprising an organolithium compound, a group IIa metal salt, and an organoaluminum compound, and polymerizing the butadiene monomer up to a conversion rate of 80 %, preferably 90 %, to give a high molecular weight diene polymer (A), wherein 65% by weight or more of the butadiene monomers are incorporated into the polymer chains in the form of the trans isomer; and (ii) a subsequent second stage of adding a second portion of a polymerization initiator comprising at least an organolithium compound and polymerizing to obtain the blend of the high molecular weight diene polymer (A) and the low molecular weight diene polymer (B).

The present invention thus describes an in-situ method, i.e. a method wherein the high molecular weight diene polymer (A) (in the following also referred to as the high molecular weight component) as well as the low molecular weight diene polymer (B) (hereinafter also referred to as the low molecular weight component) are prepared in a single polymerization procedure, rather than being prepared individually and then combining the individual components by way of physical mixing.

The method of anionically polymerizing the butadiene monomers and, optionally, the one or more monomers that are selected from aromatic vinyl compounds, alpha olefins and further conjugated diene monomers in the presence of a polymerization initiator in an organic solvent as described herein yields a high molecular weight diene polymer (A) derived from butadiene monomers and, optionally, aromatic vinyl compounds, alpha olefins and further conjugated diene monomers, wherein polymer (A) has 55-100 % by weight of units derived from butadiene monomers and 0-45 % by weight of units derived from aromatic vinyl compounds, alpha olefins and further conjugated diene monomers. Polymer (A) further has a number average molecular weight (Mn) of from 50.000 to 1.000.000 g/mol, and 65 % by weight or more of the butadiene monomers that are incorporated into polymer (A) are incorporated into the polymer chains in the form of the trans isomer.

The method further yields a low molecular weight diene polymer (B) having a number average molecular weight (Mn) of from 250 to 10.000 g/mol. This low molecular weight component (B) as well as the high molecular weight component (A) is contained in the blend that is described herein.

### Detailed Description of the Invention

The method for the preparation of the synthetic rubber blend comprises the following steps:
anionically polymerizing butadiene monomers and, optionally, one or more monomers selected from aromatic vinyl compounds, alpha olefins, and further conjugated diene monomers in the presence of at least one polymerization initiator in an organic solvent, wherein the step of polymerizing the butadiene monomers and, optionally, aromatic vinyl compounds, the alpha olefins and further conjugated diene monomers comprises (i) a first stage of providing butadiene monomers and, optionally,
aromatic vinyl compounds, alpha olefins and further conjugated diene monomers, and a first portion of a polymerization initiator comprising an organolithium compound, a group IIa metal salt, and an organoaluminum compound, and polymerizing the butadiene monomer up to a conversion rate of 80 %, preferably 90 %, to give a high molecular weight diene polymer (A), wherein 65% by weight or more of the butadiene monomers are incorporated into the polymer chains in the form of the trans isomer; and (ii) a subsequent second stage of adding a second portion of a polymerization initiator comprising at least an organolithium compound and polymerizing to obtain the blend of the high molecular weight diene polymer (A) and the low molecular weight diene polymer (B).

Without wishing to be bound by any particular theory, the inventors believe that the use of the particular polymerization initiator and the stepwise addition of the polymerization initiator during stages (i) and (ii) yields a blend of the high molecular and the low molecular weight components (A) and (B) wherein this blend is different from a traditional physical mixture. Specifically, it was found that conducting the anionic polymerization in two stages as described herein allows the provision of a blend with particularly valuable properties that cannot be obtained by standard prior art procedures. The polymerization initiator that is used in stage (i) of the method of the present invention comprises an organolithium compound, a group IIa metal salt and an organoaluminum compound.

The organolithium compound can include monofunctional or multifunctional initiator types known for polymerizing conjugated diolefin monomers; and the organolithium initiator can also be a functionalized compound. Preferred organolithium compounds include ethyl lithium, isopropyl lithium, n-butyllithium, sec-butyllithium, n-heptyllithium, tert-octyl lithium, n-eicosyl lithium, phenyl lithium, 2-napthyllithium, 4-butylphenyllithium, 4-tolyl-lithium, 4-phenylbutyllithium, cyclohexyl lithium; with n-butyllithium being the particularly preferred organolithium compound.

The group IIa metal salt that forms part of the polymerization initiator during the first stage of the method described herein can be selected from the group IIa metal salts of amino glycols or group IIa metal salts of glycol ethers. The group IIa metal salts of amino glycols may be represented by the structural formula:

NR₂-[-A-O-]*ₙ*-M-[-O-A-]*ₙ-*NR₂

wherein the R groups can be the same or different and represent alkyl groups (including cycloalkyl groups), aryl groups, alkaryl groups or arylalkyl groups; M in this structural formula represents a group IIa metal selected from beryllium, magnesium, calcium, strontium, or barium; wherein n represents an integer of from 2 to about 10; and wherein A represents an alkylene group that contains from about 1 to about 6 carbon atoms. In one example, M represents strontium or barium. In another example, M represents barium. In one example, A represents an alkylene group that contains from 2 to about 4 carbon atoms. In another example, A represents an ethylene group that contains from 2 to about 4 carbon atoms. In cases where R represents an alkyl group, the alkyl group will typically contain from 1 to about 12 carbon atoms. In one example, R represents an alkyl group that contains from about 1 to about 8 carbon atoms or a cycloalkyl group that contains from about 4 to about 8 carbon atoms. In another example, R represents an alkyl group that contains about 1 to about 4 carbon atoms. In another example, n represents an integer from about 2 to about 4. In cases were R represents an aryl group, an alkaryl group, or arylalkyl group, the aryl group, alkaryl group, or arylalkyl group will typically contain from about 6 to about 12 carbon atoms. In cases where R represents cycloalkyl groups, the group IIa metal salt will be of the structural formula: 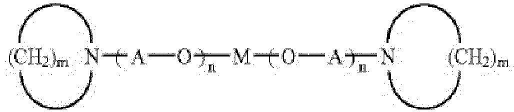 wherein m represents an integer from 4 to about 8; wherein n represents an integer from 2 to about 10; wherein M represents a group IIa metal selected from beryllium, magnesium, calcium, strontium, or barium; wherein A represents an alkylene group that contains from about 1 to about 6 carbon atoms, and wherein the A groups can be the same or different. In one example, m represents an integer from 5 to about 7, n represents an integer from about 2 to about 4, A represents an alkylene group that contains from 2 to about 4 carbon atoms. In another example, M represents strontium or barium. In yet another example, M represents barium. Some representative examples of barium salts wherein R represents cycloalkyl groups include: 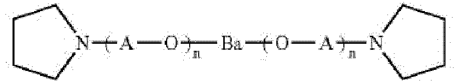 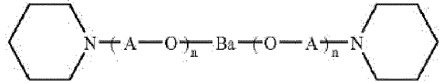 and 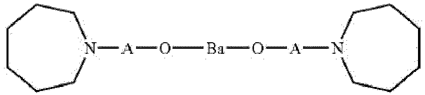 wherein A represents ethylene groups, wherein the A groups can be the same or different, and wherein n represents the integer 2. The barium salt can also contain a cycloalkyl group that contains an oxygen atom. For example, the barium salt can be of the structural formula: 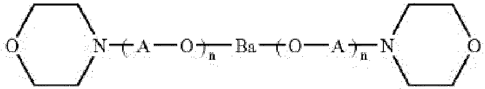 wherein A presents ethylene groups, wherein the A groups can be the same or different, and wherein n represents the integer 2. The group IIa metal salt of glycol ethers may be represented by the structural formula:

M-((O-(CH₂)_{*n*(})*ₘ*-O-CH₂)*ₓ*-CH₃)₂

wherein M represents a group IIa metal selected from beryllium, magnesium, calcium, strontium, or barium; wherein n represents an integer from 2 to 10; wherein m represents an integer from 1 to 6; and wherein x represents an integer from 1 to 12. In one example, n represents an integer from 2 to about 4, m represents an integer from 2 to 8, and x represents an integer from 1 to 8. In another example, n represents an integer from 2 to 3, m represents an integer from 2 to 4, and x represents an integer from 1 to 4. In yet another example, M represents strontium or barium, preferably M represents barium. In another embodiment, the group IIa metal salt is the barium salt of di(ethyleneglycol)ethyl ether which is of the structural formula:

Ba-(O-CH₂-CH₂-O-CH₂-CH₂-O-CH₂-CH₃)₂

In another embodiment, the group IIa metal salt is

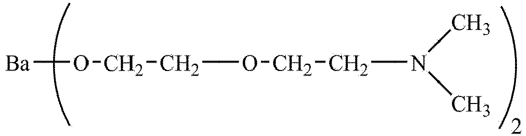

In another embodiment, the group IIa metal salts include barium salts of tri(ethyleneglycol)ethyl ethers and barium salts of tetra(ethyleneglycol)ethyl ethers.

The molar ratio of the organolithium compound to the group IIa metal salt will typically be within the range of about 0.1:1 to about 20:1. In one example, the molar ratio is within the range of 0.5:1 to about 15:1. In another example, the molar ratio of the organolithium compound to the group IIa metal salt is within the range of about 1:1 to about 6:1. In yet another example, the molar ratio is within the range of about 2:1 to about 4:1.

The organolithium compound will normally be present in the polymerization medium during stage (i) in an amount that is within the range of about 0.1 to about 2 mmol per 100 g of monomer. In one example, from about 0.4 mmol per 100 g of monomer to about 0.1.7 mmol per 100 g of monomer of the organolithium compound can be utilized. In another example, from about 0.8 mmol per 100 g of monomer to about 1.4 mmol per 100 g of monomer of the organolithium compound in the polymerization medium can be utilized. The organoaluminum compounds of the catalyst system can be represented by the structural formula: 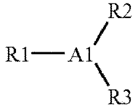 in which R1 is selected from alkyl groups (including cycloalkyl), aryl groups, alkaryl groups, arylalkyl groups, or hydrogen; R2 and R3 being selected from alkyl groups (including cycloalkyl), aryl groups, alkaryl groups, or arylalkyl groups. R1, R2, and R3, for example, can represent alkyl groups that contain from 1 to 8 carbon atoms. Some representative examples of organoaluminum compounds that can be utilized are diethyl aluminum hydride, di-n-propyl aluminum hydride, di-n-butyl aluminum hydride, diisobutyl aluminum hydride, diphenyl aluminum hydride, di-p-tolyl aluminum hydride, dibenzyl aluminum hydride, phenyl ethyl aluminum hydride, phenyl-n-propyl aluminum hydride, p-tolyl ethyl aluminum hydride, p-tolyl n-propyl aluminum hydride, p-tolyl isopropyl aluminum hydride, benzyl ethyl aluminum hydride, benzyl n-propyl aluminum hydride and benzyl isopropyl aluminum hydride, trimethyl aluminum, triethyl aluminum, tri-n-propyl aluminum, triisopropyl aluminum, tri-n-butyl aluminum, triisobutyl aluminum, tripentyl aluminum, trihexyl aluminum, tricyclohexyl aluminum, trioctyl aluminum, triphenyl aluminum, tri-p-tolyl aluminum, tribenzyl aluminum, ethyl diphenyl aluminum, ethyl di-p-tolyl aluminum, ethyl dibenzyl aluminum, diethyl phenyl aluminum, diethyl p-tolyl aluminum, diethyl benzyl aluminum and other triorganoaluminum compounds. The preferred organoaluminum compounds include tridodecylaluminum, tri-n-octylaluminum, tri-n-decylaluminum, triethyl aluminum (TEAL), tri-n-propyl aluminum, triisobutyl aluminum (TIBAL), trihexyl aluminum, and diisobutyl aluminum hydride (DIBA-H).

In one example, the organoaluminum compound can contain less than 13 carbon atoms. Such organoaluninum compounds include trimethylaluminum, triethylaluminum, tri-n-propylaluminum, tri-iso-propylaluminum, tri-isbutylaluminum, tri-t-butylaluminum, and tri-n-butylaluminum. The molar ratio of the organoaluminum compound to the group IIa metal salt is within the range of about 0.1:1 to about 20:1. In another example, the molar ratio is from about 0.5:1 to about 15:1. In another example, the molar ratio of the organoaluminum compound to the group IIa metal salt is within the range of about 1:1 to about 8:1. In yet another example, the molar ratio is within the range of about 2:1 to about 6:1. The organoaluminum compound will normally be present in the polymerization medium in an amount that is within the range of about 0.01 mmol per 100 g of monomer to about 20 mmol per 100 g of monomer. In another example, from about 0.133 mmol per 100 g of monomer to about 2.66 mmol per 100 g of monomer of the organoaluminum compound can be utilized.

Particularly preferred polymerization initiators that can be favorably used during the first stage (i) of the polymerization procedure according to the present invention comprises n-butyllithium, tri-n-octylaluminum and the barium salt of di(ethyleneglycol)ethyl ether.

The polymerization initiator that is added during stage (ii) (in the following also referred to as "stage (ii) initiator) of the method described herein as the second portion of a polymerization initiator comprises at least an organolithium compound. This organolithium is selected from the list of organolithium compounds that are disclosed herein in the context of the first portion of polymerization initiator that is used during the first stage (i) of the present method.

In a preferred embodiment, the polymerization initiator that is added during stage (ii) consists of an organolithium component. Preferably, this stage (ii) initiator is selected from ethyl lithium, isopropyl lithium, n-butyllithium, sec-butyllithium, n-heptyllithium, tert-octyl lithium, n-eicosyl lithium, phenyl lithium, 2-napthyllithium, 4-butylphenyllithium, 4-tolyl-lithium, 4-phenylbutyllithium, cyclohexyl lithium; with n-butyllithium being the particularly preferred organolithium compound.

In an alternative embodiment, the stage (ii) initiator corresponds to the initiator used in stage (i). In this embodiment of the present invention, the stage (ii) initiator thus also comprises an organolithium compound and a group IIa metal salt in addition to the organolithium compound. In a particularly preferred embodiment, the composition of the stage (ii) initiator is the same as the composition of the polymerization initiator that is used as the first portion of polymerization initiator during stage (i).

Preferably, the amount of polymerization initiator that is used during the second stage (ii) is within the range of about 10 to about 400 mmol per 100 g of monomer.

Typically, the polymerization of the monomers, i.e. of the butadiene monomers and optionally the one or more alpha olefins and the optional further conjugated monomers, as described above, is carried out at a temperature above 0°C. In a preferred embodiment, the temperature of the polymerization is in the range of 20°C-170°C, more preferably in the range of 60°C-150°C, most preferably in the range of from 90°C-110°C.

Any inert organic solvent may be suitably used for the polymerization reaction described herein. In one embodiment, the solvent is selected from non-polar aromatic and nonaromatic solvents including, without limitation, butane, butene, pentane, cyclohexane, toluene, hexane, heptane and octane. In a preferred embodiment, the solvent is selected from butane, butene, cyclohexane, hexane, heptane, toluene or mixtures thereof.

Preferably, the solid content of the monomers to be polymerized is from 5 to 35 percent by weight, more preferably from 10 to 30 percent by weight, and most preferably from 15 to 25 percent by weight, based on the total weight of monomers and solvent. The term "total solid content of monomers" (herein abbreviated as TSC), "solid content of monomers", or similar terms, as used herein, refer to the total mass (or weight) percentage of monomers, based on the total weight of solvent and monomers (e.g. 1,3-butadiene and styrene).

The step of anionically polymerizing that forms part of the method described herein comprises a first stage (i) of providing butadiene monomers and, optionally, aromatic vinyl compounds, alpha olefins and further, optionally, conjugated diene monomers as well as a first portion of the polymerization initiator; and polymerizing the butadiene monomer and, optionally, aromatic vinyl compounds, the alpha olefins and further optionally conjugated diene monomers up to a conversion rate of at least 80% to obtain the high molecular weight component (A). The term "up to a conversion rate of at least 80%" or similar expressions relates to the conversion based on the amounts of monomers provided. In a preferred embodiment, the conversion rate is 90 % by weight, preferably 94% by weight based on the amount of monomers provided. The term "conversion rate", as used herein, refers to the monomer conversion (for example the sum of conversion of styrene and 1,3-butadiene) in a given polymerization reactor at the end of the first stage (i) before conducting the subsequent second stage (ii) of adding a second portion of a polymerization initiator.

The second stage (ii) of adding the second portion of polymerization initiator and polymerizing results in the low molecular weight component and is carried out up to complete conversion of monomers provided. Complete conversion in the context of the present invention refers to a maximum residual monomer content of 1000 ppm, more preferably 500 ppm, of each monomer or less.

Conducting the step of anionic polymerization in two stages as described herein allows the provision of a high molecular weight diene polymer (A) having a high trans content such that 65 percent by weight or more of the butadiene monomers are incorporated into the polymer chains in the form of the trans isomer, and having a number average molecular weight (Mn) of from 50.000 to 1.000.000 g/mol; and, simultaneously, provides a low molecular weight diene polymer (B) with a number average molecular weight (Mn) of from 250 to 10.000 g/mol. The low molecular weight polymer (B) typically has a trans content of 50 % by weight or more. That is to say, typically, 50 % by weight or more of the butadiene monomers that are present in the polymer chains of polymer (B) are incorporated into the polymer chains in the form of the trans isomer.

Depending on the amount of initiator, the temperature and the conversion rate reached when adding the second portion of the polymerization initiator, the molecular weight (Mn) of the high molecular weight component as well as the molecular weight of the low molecular weight component as well as the amounts of both components in the blend can be adjusted.

Representative examples of the butadiene monomers and the optional conjugated diene monomers include, but are not limited to, 1,3-butadiene, 2-alkyl-1,3-butadiene, isoprene (2-methyl-1,3-butadiene), 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene, 1,3-cyclooctadiene, and combinations thereof. Preferred conjugated diene monomers include, but are not limited to, 1,3-butadiene, isoprene, and combinations thereof.

In addition to the butadiene monomers and the optional additional conjugated diene monomers, one or more alpha olefin monomer(s) may optionally be provided for the polymerization step.

Suitable examples of α-olefin monomers include, but are not limited to, vinyl silanes, the vinyl aromatic monomers being preferably selected from styrene and its derivatives, including, without limitation, C1-4 alkyl substituted styrenes, such as 2-methylstyrene, 3-methylstyrene, α-methylstyrene, 2,4-dimethylstyrene, 2,4,6-trimethylstyrene, α-methylstyrene, and stilbene, 2,4-diisopropylstyrene, 4-tert-butylstyrene, vinyl benzyl dimethylamine, (4-vinylbenzyl)dimethyl aminoethyl ether, N,N-dimethylaminoethyl styrene, N,N-bis-(trialkylsilyl)aminostyrene, tert-butoxystyrene, vinylpyridine, divinylbenzene, including 1,2-divinylbenzene, 1,3-divinylbenzene and 1,4-divinylbenzene.

Preferred examples of vinyl silanes are vinyl silane compounds of the formula (VI), formula (IA), formula (IB), formula (4) and formula (2) or multivinylaminosilane compounds of formula (5), as defined below, and/or mixtures thereof.
(i) Vinyl silane according to formula (VI): 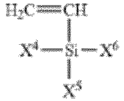 wherein X⁴, X⁵, and X⁶ independently denote a group of formula (Via), a hydrocarbyl group, or a substituted hydrocarbyl group, and at least one of X⁴, X⁵, and X⁶ is a group of formula (Via), 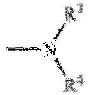 wherein R³ and R⁴ independently denote a hydrocarbyl group having 1 to 10 carbon atoms, a substituted hydrocarbyl group having 1 to 10 carbon atoms, a silyl group, or a substituted silyl group, and R³ and R⁴ may be bonded so as to form, together with the nitrogen atom, a ring structure, and
(ii) Vinyl silanes according to formula (1A) and to formula (1B) 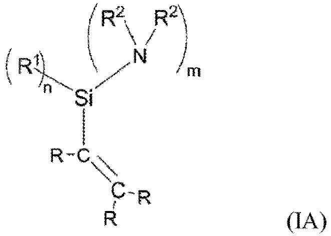 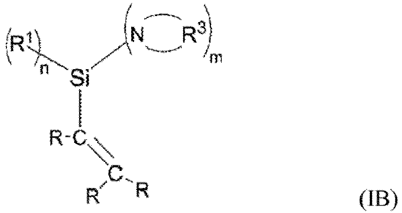 where n is a whole number selected from the group consisting of 0-2, and m is a whole number selected from the group consisting of 1-3, with the proviso that the sum of m and n equals 3; where each R is independently a hydrogen, alkyl or aryl group; where each R¹ is independently a hydrocarbyl group; where each R² is independently a hydrocarbyl group having between 2 and 12 carbon atoms; where each R³ is independently a hydrocarbylene group having between 2 and 12 carbon atoms; and where one or more R² may form a bridge between two nitrogen atoms when m is greater than 1; and
(iii) Vinyl silane according to formula (4) 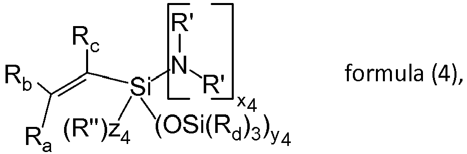 wherein Rd is independently selected from C1-C18 hydrocarbyl; R" is selected from C1-C6 hydrocarbyl; Ra, Rb and Rc are independently selected from hydrogen, methyl, ethyl and vinyl; x4 and y4 are independently integers selected from 1 and 2; z4 is an integer selected from 0 and 1; and x4+y4+z4=3; R' is independently selected from C1-C12 alkyl, C2-C12 alkenyl, C6-C18 aryl, C7-C18 alkylaryl, and tri(C1-C6 alkyl, C6-C12 aryl or C7-C18 (alkylaryl)silyl, wherein the two R' groups may be connected to form a ring and the ring may contain, further to the Si-bonded nitrogen atom, one or more of an oxygen atom, a nitrogen atom, an >N(C1-C6 alkyl) group and a sulfur atom; and one R' may be -Si(CRc=CRaRb)(OSi(Rd)3)y4(R")z4, wherein Ra, Rb, Rc, Rd, R", y4 and z4 are independently as defined above and y4+z4=2.
   In preferred embodiments of the vinylsilane compound of formula (4), the parameters and substituents take the following values:
   a) (Rd)3 is (methyl, methyl, t-butyl) or (phenyl, phenyl, phenyl) or (t-butyl, phenyl, phenyl) or (hexyl, hexyl, hexyl); R' is independently selected from methyl, ethyl, n-propyl, n-butyl, pentyl, hexyl, heptyl, octyl and benzyl (bonded via methyl group), or -NR'R' forms a morpholine group, pyrrolidine group, piperidine group , C1-C6 alkylpiperazine or oxazolidine group; R" is methyl; Ra, Rb and Rc are each hydrogen; and x4=y4=z4=1;
   b) (Rd)3 is (methyl, methyl, t-butyl) or (hexyl, hexyl, hexyl); R' is independently selected from methyl and ethyl, or-NR'R' forms a morpholine group, pyrrolidine group, piperidine group, C1-C6 alkylpiperazine or oxazolidine group; R" is methyl; Ra, Rb and Rc are each hydrogen; and x4=2, y4=1 and z4=0;
   c) (Rd)3 is (methyl, methyl, t-butyl) or (hexyl, hexyl, hexyl); R' is independently selected from methyl and ethyl, or-NR'R' forms a morpholine group, pyrrolidine group, piperidine, C1-C6 alkylpiperazine group or oxazolidine group; R" is methyl; Ra and Rb are each hydrogen and Rc is vinyl; and x4=y4=z4=1.

   Preferred embodiments of the vinylsilane compound of formula (4) are (tert-butyldimethylsiloxy)(piperidinyl)-methyl(vinyl)silane, (tert-butyldimethylsiloxy) -4-(N-methylpiperazinyl)-methyl(vinyl)silane, (tert-butyldimethylsiloxy)-4-(N-ethylpiperazinyl)-methyl(vinyl)silane, (tert-butyldimethylsiloxy-4-(N-propylpiperazinyl)-methyl(vinyl)silane, (tert-butyldimethylsiloxy)-4-(N-butylpiperazinyl)-methyl(vinyl)silane, (tert-butyldimethylsiloxy) -4-(N-hexylpiperazinyl)-methyl(vinyl)silane, (tert-butyldimethylsiloxy)(dibenzylamino)-methyl(vinyl)silane, (tert-butyldimethylsiloxy)(dicyclohexylamino)-methyl(vinyl)silane and/or (tert-butyldimethylsiloxy)(dibutylamino)-methyl(vinyl)silane.
(iv) Vinyl silane according to formula (4a)
   In another preferred embodiment, the vinylsilane compound of formula (4) is represented by formula (4a), as defined below. 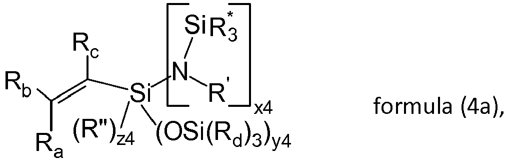 wherein R* is independently selected from C1-C6 alkyl, C6-C12 aryl and C7-C18 alkylaryl, and the remaining groups and parameters are as defined for formula (4).
   Preferred embodiments of the vinylsilane compound of formula (4a) are (tert-butyldimethylsiloxy)[(trimethylsilyl)-propylamino]methyl(vinyl)silane(tert-butyldimethylsiloxy)-[(trimethylsilyl)methylamino]methyl(vinyl)silane, (tert-butyldimethylsiloxy)[(trimethylsilyl)ethylamino]methyl(vinyl)silane, (tert-butyldimethylsiloxy)[(trimethylsilyl)-butylamino]methyl(vinyl)silane, (tert-butyldimethylsiloxy)-[(dimethylphenylsilyl)propylamino]methyl(vinyl)silane, (tert-butyldimethylsiloxy)[(dimethylphenylsilyl)ethylamino]methyl(vinyl)silane, and (tert-butyldimethylsiloxy)[(dimethyl-phenylsilyl)methylamino]methyl(vinyl)silane.
   Vinylsilane compounds, as described above, are disclosed in more detail in Taiwan(R.O.C.) Patent Application No. 103128797 which is entirely incorporated by reference.
(v) Vinyl silane according to formula (5)
   The multivinylaminosilane compound of formula (5) is defined as follows:

   (A1)-Bn1 formula (5),

   wherein A1 is an organic group having at least two amino groups; each B is independently selected from a group
   -Si(R51)(R52)(R53), wherein R51, R52 and R53 are each independently selected from vinyl, butadienyl, methyl, ethyl, propyl, butyl and phenyl, provided that at least one of R51, R52 and R53 is selected from vinyl and butadienyl, wherein each group B is a substituent of an amino group of group A1, and at least two of the amino groups of group A1 are each substituted with at least one group B; and n1 is an integer of at least 2, preferably an integer selected from 2 to 6; and all amino groups in group A1 are tertiary amino groups.

The multivinylaminosilane of formula (5) has at least two amino groups substituted with at least one ethylenically unsaturated silyl group B. The expression "group B is a substituent of an amino group" or "amino group substituted with a group B" is used herein to describe the bonding of the group B to the nitrogen atom of the amino group, i.e. >N-Si(R51)(R52)(R53). An amino group of group A1 may be substituted with 0, 1 or 2 groups B. All amino groups of group A1 are tertiary amino groups, i.e. amino groups carrying no hydrogen atom. The organic group A1 is preferably a group having no polymerization hydrogens. The expression "polymerization hydrogen" is used in the context of the present invention to designate a hydrogen atom which is not inert, i.e. will react, in an anionic polymerization of conjugated dienes, such as butadiene or isoprene. The organic group A1 is also preferably a group having no electrophilic groups. The expression "electrophilic groups" is used in the context of the present invention to designate a group which will react with n-butyllithium as a model initiator and/or with the living chain in an anionic polymerization of conjugated dienes, such as butadiene or isoprene. Electrophilic groups include: alkynes, (carbo)cations, halogen atoms, Si-O, Si-S, Si-halogen groups, metal-C-groups, nitriles, (thio)-carboxylates, (thio)carboxylic esters, (thio)anhydrides, (thio)ketones, (thio)aldehydes, (thio)cyanates, (thio)-isocyanates, alcohols, thiols, (thio)sulfates, sulfonates, sulfamates, sulfones, sulfoxides, imines, thioketals, thioacetals, oximes, carbazones, carbodiimides, ureas, urethanes, diazonium salts, carbamates, amides, nitrones, nitro groups, nitrosamines, xanthogenates, phosphanes, phosphates, phosphines, phosphonates, boronic acids, boronic esters, etc.

More preferably, the organic group A1 is a group having neither polymerization hydrogens nor electrophilic groups.

In preferred embodiments, the multivinylaminosilane of formula (5) is selected from the following compounds: 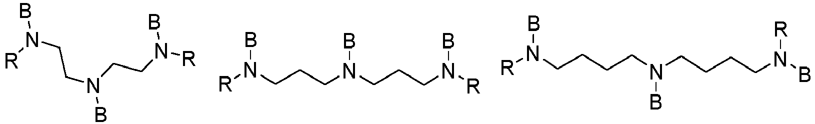 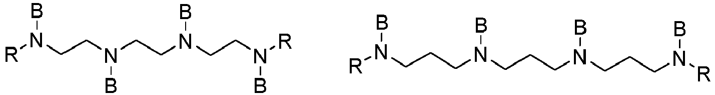 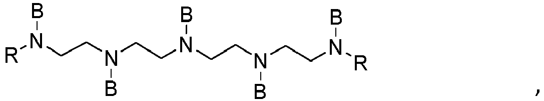 wherein each R is independently selected from B and C1-C6 alkyl, or benzyl, and the same limitations and provisos of formula (5) apply as regards the group B. 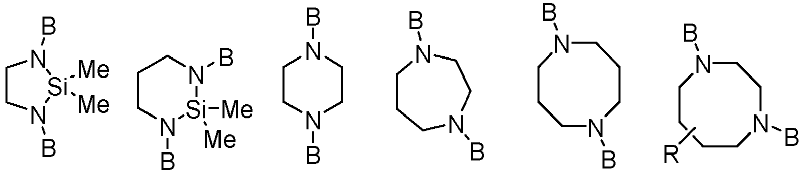 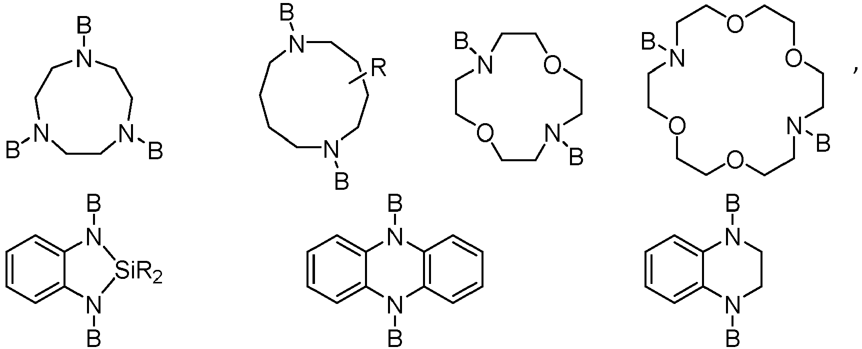 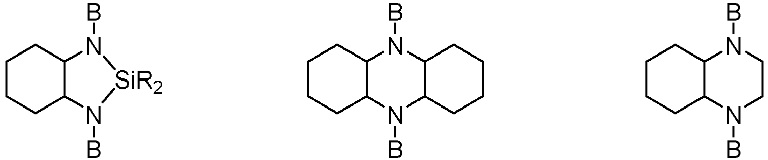 wherein R is a C1-C6 alkyl group, and the same limitations and provisos of formula (5) apply as regards the group B. 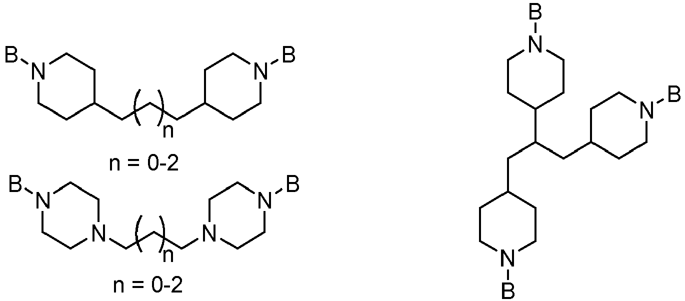 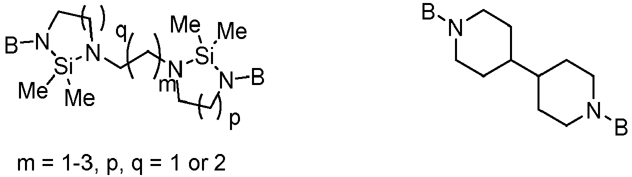 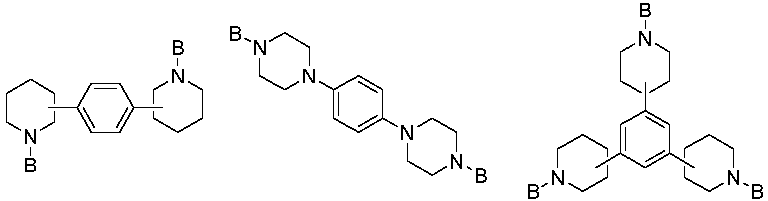 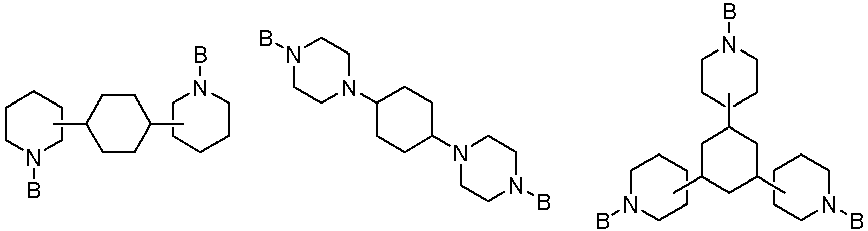 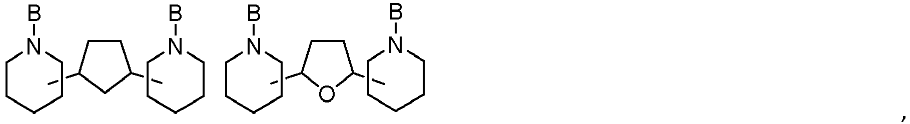 wherein the same limitations and provisos of formula (5) apply as regards the group B. 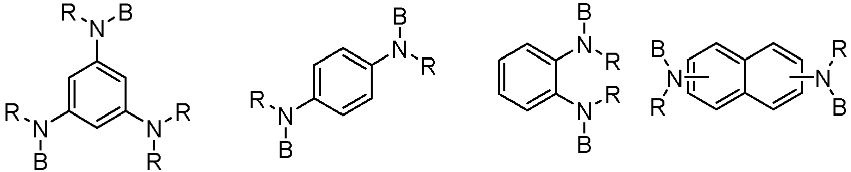 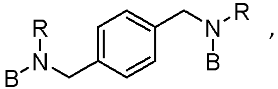 wherein each R is independently selected from B, C1-C4 alkyl and phenyl, and the same limitations and provisos of formula (5) apply as regards the group B.

### (v) vinyl silane according to formula (2)

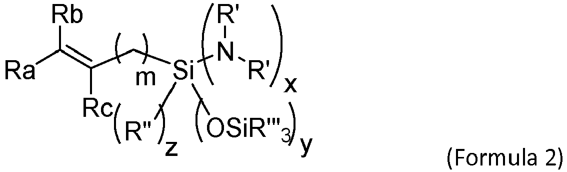

wherein
R' is independently selected from C₁-C₁₂ alkyl, C₂-C₁₂ alkenyl, C₆-C₁₈ aryl and C₇-C₁₈ alkylaryl, wherein the two R' groups may be connected to form a ring and the ring may contain, further to the Si-bonded nitrogen atom, one or more of an oxygen atom, a nitrogen atom, an >N(C₁-C₆ alkyl, C₆-C₁₈ aryl, C₇-C₁₈ alkylaryl) group and a sulfur atom;
R" is selected from C₁-C₆ hydrocarbyl;
R"' is independently selected from C₁-C₁₈ hydrocarbyl;
Rₐ, R_{b} and R_{c} are independently selected from hydrogen, methyl, ethyl and vinyl;
x is an integer selected from 1 and 2; y is an integer selected from 0,1 and 2; z is an integer selected from 0,1 and 2; and x+y+z=3;
m is selected from 0 and 1; with the proviso that, when none of Rₐ, R_{b} and R_{c} is vinyl, then m=0.

Preferably, the entire amount of monomers is provided at the beginning of stage (i). In an alternative embodiment, it is also possible to provide a minimum of at least 25 % by weight of the monomers that are used for the polymerization reaction at the beginning of stage (i) while the remaining portion of the monomers, i.e. of from 0 to 75 % by weight are added at a later point in time. The amount of the individual monomers, i.e. the amount of butadiene monomers, the optional aromatic vinyl compounds, the optional alpha olefins and the optional other conjugated diene monomers are such that the polymerization procedure described herein yields a polymer (A) having 55 to 100 % by weight of units derived from butadiene monomers while the remaining 0-45 % by weight of structural units are derived from the optional aromatic vinyl compounds, alpha olefins and the optional other conjugated diene monomers.

Preferred monomer compositions that are provided in stage (i) include: 1,3-butadiene, and styrene in an amount ratio of from 100 : 0 to 55 : 45 wt%; in an alternative embodiment, preferred monomer composition, include 1,3-butadiene, isoprene and styrene

In a preferred embodiment of the present invention, the method further includes the functionalization of the high molecular weight diene polymer (A) and/or of the low molecular weight diene polymer (B). This functionalization can be carried out by way of suitable modification reactions that are known in the art to introduce a suitable functional group. Suitable agents for such a functionalization include a functionalized initiator, a backbone functionalizing agent as well as end-group functionalizing agents and coupling agents. For the purposes of the present invention, such initiators and agents are collectively referred to as functionalizing components.

### Chain End-Modifying Agents

One or more chain end-modifying agents may be used in the polymerization reaction of the present invention for further controlling polymer blend properties by reacting with the terminal ends of the polymer chains in the polymer blend of the invention. Generally, silane-sulfide omega chain end-modifying agents such as disclosed in WO2007/047943, WO2009/148932(NMP, Epoxide), US6,229,036 (Degussa, Sulfanyl silanes) and US2013/0131263 (Goodyear, siloxy+trithiocarbonate), each incorporated herein by reference in its entirety, can be used for this purpose.

Preferred examples of silane-sulfide omega chain end-modifying agents include, without limitation, (MeO)₃Si-(CH₂)₃-S-SiMe₃, (EtO)₃Si-(CH₂)₃-S-SiMe₃, (PrO)₃Si-(CH₂)₃-S-SiMe₃, (BuO)₃Si-(CH₂)₃-S-SiMe₃, (MeO)₃Si-(CH₂)₂-S-SiMe₃, (EtO)₃Si-(CH₂)₂-S-SiMe₃, (PrO)₃Si-(CH₂)₂-S-SiMe₃, (BuO)₃Si-(CH₂)₂-S-SiMe₃, (MeO)₃Si-CH₂-S-SiMe₃, (EtO)₃Si-CH₂-S-SiMe₃, (PrO)₃Si-CH₂-S-SiMe₃, (BuO)₃Si-CH₂-S-SiMe₃, (MeO)₃Si-CH₂-CMe₂-CH₂-S-SiMe₃, (EtO)₃Si-CH₂-CMe₂-CH₂-S-SiMe₃, (PrO)₃Si-CH₂-CMe₂-CH₂-S-SiMe₃, (BuO)₃Si-CH₂-CMe₂-CH₂-S-SiMe₃, (MeO)₃Si-CH₂-C(H)Me-CH₂-S-SiMe₃, (EtO)₃Si-CH₂-C(H)Me-CH₂-S-SiMe₃, (PrO)₃Si-CH₂-C(H)Me-CH₂-S-SiMe₃, (BuO)₃Si-CH₂-C(H)Me-CH₂-S-SiMe₃, (MeO)₃Si-(CH₂)₃-S-SiEt₃, (EtO)₃Si-(CH₂)₃-S-SiEt₃, (PrO)₃Si-(CH₂)₃-S-SiEt₃, (BuO)₃Si-(CH₂)₃-S-SiEt₃, (MeO)₃Si-(CH₂)₂-S-SiEt₃, (EtO)₃Si-(CH₂)₂-S-SiEt₃, (PrO)₃Si-(CH₂)₂-S-SiEt₃, (BuO)₃Si-(CH₂)₂-S-SiEt₃, (MeO)₃Si-CH₂-S-SiEt₃, (EtO)₃Si-CH₂-S-SiEt₃, (PrO)₃Si-CH₂-S-SiEt₃, (BuO)₃Si-CH₂-S-SiEt₃, (MeO)₃Si-CH₂-CMe₂-CH₂-S-SiEt₃, (EtO)₃Si-CH₂-CMe₂-CH₂-S-SiEt₃, (PrO)₃Si-CH₂-CMe₂-CH₂-S-SiEt₃, (BuO)₃Si-CH₂-CMe₂-CH₂-S-SiEt₃, (MeO)₃Si-CH₂-C(H)Me-CH₂-S-SiEt₃, (EtO)₃Si-CH₂-C(H)Me-CH₂-S-SiEt₃, (PrO)₃Si-CH₂-C(H)Me-CH₂-S-SiEt₃, (BuO)₃Si-CH₂-C(H)Me-CH₂-S-SiEt₃, (MeO)₃Si-(CH₂)₃-S-SiMe₂tBu, (EtO)₃Si-(CH₂)₃-S-SiMe₂tBu, (PrO)₃Si-(CH₂)₃-S-SiMe₂tBu, (BuO)₃Si-(CH₂)₃-S-SiMe₂tBu, (MeO)₃Si-(CH₂)₂-S-SiMe₂tBu, (EtO)₃Si-(CH₂)₂-S-SiMe₂tBu, (PrO)₃Si-(CH₂)₂-S-SiMe₂tBu, (BuO)₃Si-(CH₂)₂-S-SiMe₂tBu, (MeO)₃Si-CH₂-S-SiMe₂tBu, (EtO)₃Si-CH₂-S-SiMe₂tBu, (PrO)₃Si-CH₂-S-SiMe₂tBu, (BuO)₃Si-CH₂-S-SiMe₂tBu, (MeO)₃Si-CH₂-CMe₂-CH₂-S-SiMe₂tBu, (EtO)₃Si-CH₂-CMe₂-CH₂-S-SiMe₂tBu, (PrO)₃Si-CH₂-CMe₂-CH₂-S-SiMe₂tBu, (BuO)₃Si-CH₂-CMe₂-CH₂-S-SiMe₂tBu, (MeO)₃Si-CH₂-C(H)Me-CH₂-S-SiMe₂tBu, (EtO)₃Si-CH₂-C(H)Me-CH₂-S-SiMe₂tBu, (PrO)₃Si-CH₂-C(H)Me-CH₂-S-SiMe₂tBu, (BuO)₃Si-CH₂-C(H)Me-CH₂-S-SiMe₂tBu, (MeO)₂MeSi-(CH₂)₃-S-SiMe₃, (EtO)₂MeSi-(CH₂)₃-S-SiMe₃, (PrO)₂MeSi-(CH₂)₃-S-SiMe₃, (BuO)₂MeSi-(CH₂)₃-S-SiMe₃, (MeO)₂MeSi-(CH₂)₂-S-SiMe₃, (EtO)₂MeSi-(CH₂)₂-S-SiMe₃, (PrO)₂MeSi-(CH₂)₂-S-SiMe₃, (BuO)₂MeSi-(CH₂)₂-S-SiMe₃, (MeO)₂MeSi-CH₂-S-SiMe₃, (EtO)₂MeSi-CH₂-S-SiMe₃, (PrO)₂MeSi-CH₂-S-SiMe₃, (BuO)₂MeSi-CH₂-S-SiMe₃, (MeO)₂MeSi-CH₂-CMe₂-CH₂-S-SiMe₃, (EtO)₂MeSi-CH₂-CMe₂-CH₂-S-SiMe₃, (PrO)₂MeSi-CH₂-CMe₂-CH₂-S-SiMe₃, (BuO)₂MeSi-CH₂-CMe₂-CH₂-S-SiMe₃, (MeO)₂MeSi-CH₂-C(H)Me-CH₂-S-SiMe₃, (EtO)₂MeSi-CH₂-C(H)Me-CH₂-S-SiMe₃, (PrO)₂MeSi-CH₂-C(H)Me-CH₂-S-SiMe₃, (BuO)₂MeSi-CH₂-C(H)Me-CH₂-S-SiMe₃, (MeO)₂MeSi-(CH₂)₃-S-SiEt₃, (EtO)₂MeSi-(CH₂)₃-S-SiEt₃, (PrO)₂MeSi-(CH₂)₃-S-SiEt₃, (BuO)₂MeSi-(CH₂)₃-S-SiEt₃, (MeO)₂MeSi-(CH₂)₂-S-SiEt₃, (EtO)₂MeSi-(CH₂)₂-S-SiEt₃, (PrO)₂MeSi-(CH₂)₂-S-SiEt₃, (BuO)₂MeSi-(CH₂)₂-S-SiEt₃, (MeO)₂MeSi-CH₂-S-SiEt₃, (EtO)₂MeSi-CH₂-S-SiEt₃, (PrO)₂MeSi-CH₂-S-SiEt₃, (BuO)₂MeSi-CH₂-S-SiEt₃, (MeO)₂MeSi-CH₂-CMe₂-CH₂-S-SiEt₃, (EtO)₂MeSi-CH₂-CMe₂-CH₂-S-SiEt₃, (PrO)₂MeSi-CH₂-CMe₂-CH₂-S-SiEt₃, (BuO)₂MeSi-CH₂-CMe₂-CH₂-S-SiEt₃, (MeO)₂MeSi-CH₂-C(H)Me-CH₂-S-SiEt₃, (EtO)₂MeSi-CH₂-C(H)Me-CH₂-S-SiEt₃, (PrO)₂MeSi-CH₂-C(H)Me-CH₂-S-SiEt₃, (BuO)₂MeSi-CH₂-C(H)Me-CH₂-S-SiEt₃,(MeO)₂MeSi-(CH₂)₃-S-SiMe₂tBu,(EtO)₂MeSi-(CH₂)₃-S-SiMe₂tBu, (PrO)₂MeSi-(CH₂)₃-S-SiMe₂tBu, (BuO)₂MeSi-(CH₂)₃-S-SiMe₂tBu, (MeO)₂MeSi-(CH₂)₂-S-SiMe₂tBu, (EtO)₂MeSi-(CH₂)₂-S-SiMe₂tBu, (PrO)₂MeSi-(CH₂)₂-S-SiMe₂tBu, (BuO)₂MeSi-(CH₂)₂-S-SiMe₂tBu, (MeO)₂MeSi-CH₂-S-SiMe₂tBu, (EtO)₂MeSi-CH₂-S-SiMe₂tBu, (PrO)₂MeSi-CH₂-S-SiMe₂tBu, (BuO)₂MeSi-CH₂-S-SiMe₂tBu, (MeO)₂MeSi-CH₂-CMe₂-CH₂-S-SiMe₂tBu, (EtO)₂MeSi-CH₂-CMe₂-CH₂-S-SiMe₂tBu, (PrO)₂MeSi-CH₂-CMe₂-CH₂-S-SiMe₂tBu, (BuO)₂MeSi-CH₂-CMe₂-CH₂-S-SiMe₂tBu, (MeO)₂MeSi-CH₂-C(H)Me-CH₂-S-SiMe₂tBu, (EtO)₂MeSi-CH₂-C(H)Me-CH₂-S-SiMe₂tBu, (PrO)₂MeSi-CH₂-C(H)Me-CH₂-S-SiMe₂tBu, (BuO)₂MeSi-CH₂-C(H)Me-CH₂-S-SiMe₂tBu, (MeO)Me₂Si-(CH₂)₃-S-SiMe₃, (EtO)Me₂Si-(CH₂)₃-S-SiMe₃, (PrO)Me₂Si-(CH₂)₃-S-SiMe₃, (BuO)Me₂Si-(CH₂)₃-S-SiMe₃, (MeO)Me₂Si-(CH₂)₂-S-SiMe₃, (EtO)Me₂Si-(CH₂)₂-S-SiMe₃, (PrO)Me₂Si-(CH₂)₂-S-SiMe₃, (BuO)Me₂Si-(CH₂)₂-S-SiMe₃, (MeO)Me₂Si-CH₂-S-SiMe₃, (EtO)Me₂Si-CH₂-S-SiMe₃, (PrO)Me₂Si-CH₂-S-SiMe₃, (BuO)Me₂Si-CH₂-S-SiMe₃, (MeO)Me₂Si-CH₂-CMe₂-CH₂-S-SiMe₃, (EtO)Me₂Si-CH₂-CMe₂-CH₂-S-SiMe₃, (PrO)Me₂Si-CH₂-CMe₂-CH₂-S-SiMe₃, (BuO)Me₂Si-CH₂-CMe₂-CH₂-S-SiMe₃, (MeO)Me₂Si-CH₂-C(H)Me-CH₂-S-SiMe₃, (EtO)Me₂Si-CH₂-C(H)Me-CH₂-S-SiMe₃, (PrO)Me₂Si-CH₂-C(H)Me-CH₂-S-SiMe₃, (BuO)Me₂Si-CH₂-C(H)Me-CH₂-S-SiMe₃, (MeO)Me₂Si-(CH₂)₃-S-SiEt₃, (EtO)Me₂Si-(CH₂)₃-S-SiEt₃, (PrO)Me₂Si-(CH₂)₃-S-SiEt₃, (BuO)Me₂Si-(CH₂)₃-S-SiEt₃, (MeO)Me₂Si-(CH₂)₂-S-SiEt₃, (EtO)Me₂Si-(CH₂)₂-S-SiEt₃, (PrO)Me₂Si-(CH₂)₂-S-SiEt₃, (BuO)Me₂Si-(CH₂)₂-S-SiEt₃, (MeO)Me₂Si-CH₂-S-SiEt₃, (EtO)Me₂Si-CH₂-S-SiEt₃, (PrO)Me₂Si-CH₂-S-SiEt₃, (BuO)Me₂Si-CH₂-S-SiEt₃, (MeO)Me₂Si-CH₂-CMe₂-CH₂-S-SiEt₃, (EtO)Me₂Si-CH₂-CMe₂-CH₂-S-SiEt₃, (PrO)Me₂Si-CH₂-CMe₂-CH₂-S-SiEt₃, (BuO)Me₂Si-CH₂-CMe₂-CH₂-S-SiEt₃, (MeO)Me₂Si-CH₂-C(H)Me-CH₂-S-SiEt₃, (EtO)Me₂Si-CH₂-C(H)Me-CH₂-S-SiEt₃, (PrO)Me₂Si-CH₂-C(H)Me-CH₂-S-SiEt₃, (BuO)Me₂Si-CH₂-C(H)Me-CH₂-S-SiEt₃,(MeO)Me₂Si-(CH₂)₃-S-SiMe₂tBu, (EtO)Me₂Si-(CH₂)₃-S-SiMe₂tBu, (PrO)Me₂Si-(CH₂)₃-S-SiMe₂tBu, (BuO)Me₂Si-(CH₂)₃-S-SiMe₂tBu, (MeO)Me₂Si-(CH₂)₂-S-SiMe₂tBu, (EtO)Me₂Si-(CH₂)₂-S-SiMe₂tBu, (PrO)Me₂Si-(CH₂)₂-S-SiMe₂tBu, (BuO)Me₂Si-(CH₂)₂-S-SiMe₂tBu, (MeO)Me₂Si-CH₂-S-SiMe₂tBu, (EtO)Me₂Si-CH₂-S-SiMe₂tBu, (PrO)Me₂Si-CH₂-S-SiMe₂tBu, (BuO)Me₂Si-CH₂-S-SiMe₂tBu, (MeO)Me₂Si-CH₂-CMe₂-CH₂-S-SiMe₂tBu, (EtO)Me₂Si-CH₂-CMe₂-CH₂-S-SiMe₂tBu, (PrO)Me₂Si-CH₂-CMe₂-CH₂-S-SiMe₂tBu, (BuO)Me₂Si-CH₂-CMe₂-CH₂-S-SiMe₂tBu, (MeO)Me₂Si-CH₂-C(H)Me-CH₂-S-SiMe₂tBu, (EtO)Me₂Si-CH₂-C(H)Me-CH₂-S-SiMe₂tBu, (PrO)Me₂Si-CH₂-C(H)Me-CH₂-S-SiMe₂tBu, (BuO)Me₂Si-CH₂-C(H)Me-CH₂-S-SiMe₂tBu.

Most preferably, the silane-sulfide omega chain end-modifying agent is selected from (MeO)₃Si-(CH₂)₃-S-SiMe₂tBu, (MeO)₂(CH₃)Si-(CH₂)₃-S-SiMe₂tBu, (MeO)(Me)₂Si-(CH₂)₃-S-SiMe₂tBu and mixtures thereof.

The chain end-modifying agents may be added intermittently (at regular or irregular intervals) or continuously during the polymerization, but are preferably added at a conversion rate of more the polymerization of more than 80 percent and more preferably at a conversion rate of more than 90 percent. Preferably, a substantial amount of the polymer chain ends is not terminated prior to the reaction with the chain end-modifying agent; that is, living polymer chain ends are present and are capable of reacting with the modifying agent. Preferably, the chain end-modifying agents are added after the second stage dosing of initiator.

### Coupling agents

For further controlling polymer molecular weight and polymer properties, a coupling agent ("linking agent") can be used as an optional component in the process of the invention. A coupling agent will reduce hysteresis loss by reducing the free chain ends of the elastomeric polymer and/or reduce the polymer solution viscosity, compared with non-coupled essentially linear polymer macromolecules of identical molecular weight. Coupling agents such as tin tetrachloride may functionalize the polymer chain end and react with components of an elastomeric composition, for example with a filler or with unsaturated portions of polymer. Exemplary coupling agents are described in US 3,281,383, US 3,244,664 and US 3,692,874 (e.g., tetrachlorosilane); US 3,978,103 and US 6,777,569 (blocked mercaptosilanes); US 3,078,254 (multi-halogen-substituted hydrocarbon, such as 1,3,5-tri(bromo methyl) benzene); US 4,616,069 (tin compound and organic amino or amine compound); and US 2005/0124740. Generally, the chain end-modifying agent is added before, during or after the addition of the coupling agent, and the modification reaction is preferably carried out after the addition of the coupling agent. More preferably, the coupling agent is added after the second stage dosing of initiator and before addition of the chain end-modifying agent.

### Functionalized initiators

Useful initiators include the amino silane polymerization initiators described in WO2014/040640 and the polymerization initiators described in WO2015/010710.

As described herein above, it was found that the method as described herein allows the provision of a synthetic rubber blend that is of particular value when used to manufacture articles, such as tires.

In a second aspect, the invention therefore also relates to synthetic rubber blend obtainable according to the method described herein.

In a preferred embodiment, the synthetic rubber blend comprises
(a) 100 parts by weight of a high molecular weight diene polymer (A) having units derived from butadiene monomers and optionally aromatic vinyl compounds, alpha olefins and further conjugated diene monomers, further having a number average molecular weight (Mn) of from 50,000 to 1,000,000 g/mol, and wherein 65 % by weight or more of the diene monomers are incorporated into the polymer chains in the form of the trans isomer;
   and
(b) 0.01 to 20 parts by weight of a low molecular weight diene polymer (B) having units derived from butadiene monomers and optionally alpha olefins and further conjugated diene monomers, and further having a number average molecular weight (Mn) of from 250 to 10,000 g/mol.

Further preferred embodiments relate to synthetic rubber blends comprising 0.1-10 parts by weight of the low molecular weight diene polymer (B) and 99.9-90 parts by weight of the high molecular weight diene polymer (A), more preferably of from 0.5-5 parts (B) and of from 99.5-95 parts (A)

In a particularly preferred embodiment, the diene polymer (A) of the synthetic rubber blend that is described herein has a number average molecular weight (Mn) of from 60.000 to 750.000 g/mol, more preferably 65.000 to 500.000 g/mol, even more preferably of from 70.000 to 250.000 g/mol, most preferably of from 100.000 to 180.000 g/mol, and/or a weight average molecular weight of from 100.000 to 700.000, preferably of from 150.000 to 600.000, most preferably of from 280.000 to 500.000 g/mol, and/or a polydispersity Mw/Mn of from 1.8 to 4.5, preferably of from 2.8-3.8.

In a further aspect, the present invention relates to rubber compositions comprising the blend that is described herein. Such a rubber composition may further comprise one or more additional rubber components that can be selected from the group consisting of styrene butadiene rubber, butadiene rubber, synthetic isoprene rubber and natural rubber.

In a particularly preferred embodiment of this aspect of the invention, the rubber composition further comprises filler. Examples of suitable fillers include, without limitation, carbon black (including electroconductive carbon black), carbon nanotubes (CNT) (including discrete CNT, hollow carbon fibers (HCF) and modified CNT carrying one or more functional groups, such as hydroxyl, carboxyl and carbonyl groups) graphite, graphene (including discrete graphene platelets), silica, carbon-silica dual-phase filler, clays including layered silicates, calcium carbonate, magnesium carbonate, lignin, amorphous fillers, such as glass particle-based fillers, starch-based fillers, and combinations thereof. Further examples of suitable fillers are described in WO 2009/148932 which is incorporated herein by reference in its entirety.

Examples of suitable carbon black include, without limitation, the one conventionally manufactured by a furnace method, for example having a nitrogen adsorption specific surface area of 50-200 m²/g and DBP oil absorption of 80-200 mL/100 grams, such as carbon black of the FEF, HAF, ISAF or SAF class, and electroconductive carbon black. In some embodiments, high agglomeration-type carbon black is used. Carbon black is typically used in an amount of from 2 to 100 parts by weight, or 5 to 100 parts by weight, or 10 to 100 parts by weight, or 10 to 95 parts by weight per 100 parts by weight of the total polymer.

Examples of suitable silica fillers include, without limitation, wet process silica, dry process silica and synthetic silicate-type silica. Silica with a small particle diameter and high surface area exhibits a high reinforcing effect. Small diameter, high agglomeration-type silica (i.e. having a large surface area and high oil absorptivity) exhibits excellent dispersibility in the polymer composition, resulting in superior processability. An average particle diameter of silica in terms of the primary particle diameter may be from 5 to 60 nm, more preferably 10 to 35 nm. The specific surface area of the silica particles (measured by the BET method) may be from 35 to 300 m²/g. Silica is typically used in an amount of from 10 to 150 parts by weight, or 30 to 130 parts by weight, or 50 to 130 parts by weight per 100 parts by weight of the total polymer.

While the most preferred filler for the purposes of the present invention is silica, silica fillers can be used in combination with other fillers, including, without limitation, carbon black, carbon nanotubes, carbon-silica dual-phase-filler, graphene, graphite, clay, calcium carbonate, magnesium carbonate and combinations thereof.

Carbon black and silica may be added together, in which case the total amount of carbon black and silica is from 30 to 150 parts by weight or 50 to 150 parts by weight per 100 parts by weight of the total polymer.

Carbon-silica dual-phase filler is so called silica-coated carbon black made by coating silica on the surface of carbon black and commercially available under the trademark CRX2000, CRX2002 or CRX2006 (products of Cabot Co.). Carbon-silica dual-phase filler is added in the same amounts as described above with respect to silica.

In yet another aspect of the present invention, the present disclosure relates to a method for the preparation of a cross-linked rubber composition. This method comprises the step of adding one or more vulcanizing agent to the synthetic rubber blend of the invention or to the rubber composition described herein and cross-linking the composition.

Sulfur, sulfur-containing compounds acting as sulfur-donors, sulfur-accelerator systems, and peroxides are the most common vulcanizing agents. Examples of sulfur-containing compounds acting as sulfur-donors include, but are not limited to, dithiodimorpholine (DTDM), tetramethylthiuramdisulfide (TMTD), tetraethylthiuramdisulfide (TETD), and dipentamethylenthiuramtetrasulfide (DPTT). Examples of sulfur accelerators include, but are not limited to, amine derivatives, guanidine derivatives, aldehydeamine condensation products, thiazoles, thiuram sulfides, dithiocarbamates, and thiophosphates. Examples of peroxides used as vulcanizing agents include, but are not limited to, di-*tert*.-butyl-peroxides, di-(*tert*.-butyl-peroxy-trimethyl-cyclohexane), di-(*tert*.-butyl-peroxy-isopropyl-)benzene, dichloro-benzoylperoxide, dicumylperoxides, *tert*.-butyl-cumyl-peroxide, dimethyl-di(*tert*.-butyl-peroxy)hexane and dimethyl-di(*tert*.-butyl-peroxy)hexine and butyl-di(*tert*.-butyl-peroxy)valerate (Rubber Handbook, SGF, The Swedish Institution of Rubber Technology 2000). Further examples and additional information regarding vulcanizing agents can be found in Kirk-Othmer, Encyclopedia of Chemical technology 3rd, Ed., (Wiley Interscience, N.Y. 1982), volume 20, pp. 365-468, (specifically "Vulcanizing Agents and Auxiliary Materials" pp.390-402).

A vulcanizing accelerator of sulfene amide-type, guanidine-type, or thiuram-type may be used together with a vulcanizing agent, as required. Other additives such as zinc white, vulcanization auxiliaries, aging preventives, processing adjuvants, and the like may be optionally added. A vulcanizing agent is typically added to the polymer composition in an amount from 0.5 to 10 parts by weight and, in some preferred embodiments, from 1 to 6 parts by weight for 100 parts by weight of the total elastomeric polymer. Examples of vulcanizing accelerators, and the amount of accelerator added with respect to the total polymer, are given in International Patent Publication No. WO 2009/148932. Sulfur-accelerator systems may or may not comprise zinc oxide. Preferably, zinc oxide is applied as component of the sulfur-accelerator system.

The invention is further directed to a cured rubber composition that is obtainable by the above method that involves the step of crosslinking the compositions discussed herein.

Moreover, the present invention relates to articles, comprising the polymer composition, comprising the polymer blend according to the invention, or said crosslinked elastomeric polymer obtainable according to the above described method. In a preferred embodiment, the article according to the present invention is a tire, a tire tread, a tire side wall, a conveyer belt, a seal or a hose. A particularly preferred article according to the present invention is a tire for trucks.

### EXAMPLES

The following examples are provided in order to further illustrate the invention and are not to be construed as limitation of the present invention. Room temperature or ambient temperature refers to a temperature of about 20°C. All polymerizations were performed in a nitrogen atmosphere under exclusion of moisture and oxygen.

### Test methods

### Size Exclusion Chromatography

Molecular weight and molecular weight distribution of the polymer were each measured using size exclusion chromatography (SEC) based on polystyrene standards. Each polymer sample (9 to 11 mg) was dissolved in tetrahydrofuran (10 mL) to form a solution. The solution was filtered using a 0.45 µm filter. A 100-µL sample was fed into a GPC column (Hewlett Packard system 1100 with 3 PLgel 10µm MIXED-B columns). Refraction Index-detection was used as the detector for analyzing the molecular weight. The molecular weight was calculated as polystyrene based on the calibration with EasiCal PS1 (Easy A and B) Polystyrene standards from Polymer Laboratories. The number-average molecular weight (Mn) figures and the weight-average molecular weight (Mw) figures are given based on the polystyrene standards. The molecular weight distribution is expressed as the dispersity D = Mw/Mn.

### Analysis to Measure Monomer Conversion

Monomer conversion was determined by measuring the solids concentration (TSC) of the polymer solution at the end of the polymerization. The maximum solid content is obtained at 100 wt% conversion of the charged butadiene (mBd) and styrene (mSt) for the final polymer by TSC max = (mBd+ mSt)/(mBd + mSt + mpolar agent + mNBL+ mcyclohexane)^{∗}100%. A sample of polymer solution ranging from about 1 g to about 10 g, depending on the expected monomer conversion, was drawn from the reactor directly into a 200-mL Erlenmeyer flask filled with ethanol (50 mL). The weight of the filled Erlenmeyer flask was determined before sampling ("A") and after sampling ("B"). The precipitated polymer was removed from the ethanol by filtration on a weighted paper filter (Micro-glass fiber paper, 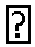 90 mm, MUNKTELL, weight "C"), dried at 140 °C, using a moisture analyzer HR73 (Mettler-Toledo) until a mass loss of less than 1 mg within 140 seconds was achieved. Finally, a second drying period was performed using switch-off at a mass loss of less than 1 mg within 90 seconds to obtain the final mass "D" of the dry sample on the paper filter. The polymer content in the sample was calculated as TSC = (D-C)/(B-A)^{∗}100%. The final monomer conversion was calculated as TSC/TSC max^{∗}100%.

### Measurement of the glass (transition) temperature Tg

The glass transition temperature was determined using a DSC Q2000 device (TA instruments), as described in ISO 11357-2 (1999) under the following conditions:

| | |
|---|---|
| Weight: | ca. 10 -12 mg; |
| Sample container: | standard alumina pans; |
| Temperature range: | (-140 - 80)°C; |
| Heating rate: | 10 or 20 K/min; |
| Cooling rate: | free cooling; |
| Purge gas: | 20 ml Ar/min; |
| Cooling agent: | liquid nitrogen; |
| Evaluation method: | inflection method. |

Each sample was measured at least once. The measurements contained two heating runs. The 2nd heating run was used to determine the glass transition temperature.

### 1H-NMR

Vinyl and total styrene content were measured using 1H-NMR, using a NMR spectrometer BRUKER Avance 400 (@400 MHz), and a 5-mm dual detection probe. CDCl3/TMS was used as solvent in a weight ratio of 0.05% : 99.95%.

### 13C-NMR

Trans content of the butadiene fraction was measured using 13C-NMR, using a NMR spectrometer BRUKER Avance 400 (@100MHz), and a 5-mm dual detection probe. CDCl3/TMS was used as solvent in a weight ratio of 0.05% : 99.95%.

### Measurement of rheological properties

Measurements of non-vulcanized rheological properties according to ASTM D 5289-95 were made using a rotor-less shear rheometer (MDR 2000 E) to characterize cure characteristics, especially the time to cure (t95). The "t95" times are the respective times required to achieve 95 % conversion of the vulcanization reaction.

### Vulcanizate Compound properties

Test pieces were vulcanized by t95 at 160°C for measurement of DIN abrasion, tensile strength and tan δ.

### Tensile strength and moduli

Tensile strength was measured according to ASTM D 412 on a Zwick Z010.

### Abrasion

DIN abrasion was measured according to DIN 53516 (1987-06-01). The larger the value, the lower the wear resistance.

### Loss factor tan δ

The loss factor tan δ (also known as "tan d") was measured at 60 °C using a dynamic spectrometer Eplexor 150N/500N manufactured by Gabo Qualimeter Testanlagen GmbH (Germany) applying a tension dynamic strain of 1 % at a frequency of 2 Hz.

### Initiator formation:

The predominantly trans-1,4-polybutadiene structures forming initiator (**IT**) was prepared according to literature procedure (i.e. US7285605B1). The initiator is prepared from barium salt of di(ethylenglycol) ethylether (BaDEGEE, 0.33 *eq*), tri-*n*-octylaluminum (TOA, 1.33 *eq*) and *n*-butyl lithium (NB, 1 *eq*). The procedure consists in a three-component formation process. Beneficially, BaDEGEE as solution in ethylbenzene (0.813 mmol/g) and TOA as solution in *n*-hexane (0.68 mmol/g) are mixed together with 10 g of cyclohexane and contacted for 30 minutes at 60 °C. Afterwards *n*-butyl lithium (NB, 1 *eq*) as solution in cyclohexane (3.1 mmol/g) is added as third initiator component and aged with the resulting compound mixture for additional 5-7 minutes and the initiator mixture is transferred to a cylinder for use in the polymerization.

### Polymer preparation

### Polymerization procedure 1: Comparative Example EA18

Cyclohexane (amount given in table 1), initial butadiene (15 % of amount given in table 1) and styrene (amount given in table 1) were charged to an airfree 10 l reactor and the stirred mixture was heated up to 80 °C. Then *n*-butyl lithium was charged dropwise to react the impurities until the color of the reaction mixture changed to yellowish (titration). Afterwards the recipe amount of initiator (see initiator formation) corresponding to the target molecular weight of the polymer was charged immediately to start the polymerization. The start time of the charge of the initiator was used as the start time of the polymerization. Parallel with the charge of the initiator the temperature was increased by heating the wall of the reactor to the final polymerization temperature of 110 °C in 30 min and incremental butadiene (42.5 % of amount given in table 1) was charged over 30 min. After charging was completed the mixture was stirred at 110 °C for further 30 min before the residual butadiene (42.5 % of amount given in table 1) was charged over 30 min. The reaction was terminated after stirring for further 60 min at 110 °C with charge of methanol. The polymer solution was stabilized with Irganox 1520D, the polymer recovered by steam stripping and dried until a content of residual volatiles < 0.6 % was obtained. The complete data set of the sample is given in table 1.

### Polymerization procedure 2: Example of the Invention EA19

Cyclohexane (amount given in table 1), initial butadiene (15 % of amount given in table 1) and styrene (amount given in table 1) were charged to an airfree 10 l reactor and the stirred mixture was heated up to 80 °C. Then *n*-butyl lithium was charged dropwise to react the impurities until the color of the reaction mixture changed to yellowish (titration). Afterwards the recipe amount of initiator (see initiator formation) corresponding to the target molecular weight of the polymer was charged immediately to start the polymerization. The start time of the charge of the initiator was used as the start time of the polymerization. Parallel with the charge of the initiator the temperature was increased by heating the wall of the reactor to the final polymerization temperature of 110 °C in 30 min and incremental butadiene (42.5 % of amount given in table 1) was charged over 30 min. After charging was completed the mixture was stirred at 110 °C for further 30 min before the residual butadiene (42.5 % of amount given in table 1) was charged over 30 min. After stirring for further 30 min at 110 °C an additional amount of *n-*butyl lithium (amount given in table 1) was dosed. the mixture was stirred at 110 °C for further 20 min before termination of the polymerization with charge of methanol. The polymer solution was stabilized with Irganox 1520D, the polymer recovered by steam stripping and dried until a content of residual volatiles < 0.6 % was obtained. The complete data set of the sample is given in table 1.

### Polymerization procedure 3: Comparative Example fx EA57

Cyclohexane (amount given in table 1), initial butadiene (29.0 % of amount given in table 1) and styrene (amount given in table 1) were charged to an airfree 10 l reactor and the stirred mixture was heated up to 80 °C. Then *n*-butyl lithium was charged dropwise to react the impurities until the color of the reaction mixture changed to yellowish (titration). Afterwards the recipe amount of initiator (see initiator formation and table 1) corresponding to the target molecular weight of the polymer was charged immediately to start the polymerization. The start time of the charge of the initiator was used as the start time of the polymerization. Parallel with the charge of the initiator the temperature was increased by heating the wall of the reactor to the final polymerization temperature of 110 °C in 30 min. After 15 min from start of the polymerization incremental butadiene (32.9 % of amount given in table 1) was charged over 15 min. After charging was completed the mixture was stirred for further 10 min at 110 °C before the second incremental butadiene (24.1 % of amount given in table 1) was charged over 20 min. The mixture was stirred for further 10 min at 110 °C before the third incremental butadiene (11.5 % of amount given in table 1) was charged over 25 min. The mixture was stirred for further 20 min at 110 °C before butadiene was dosed (1.2 % of amount given in table 1) and after 1 min stirring at 110 °C SnCl₄ (amount given in table 1) was charged. The mixture was stirred at 110 °C for further 15 min before residual butadiene was dosed (1.3 % of amount given in table 1). After 5 min stirring at 110 °C **2f** (amount given in table 1) was charged and the mixture was stirred at 110 °C for further 20 min. The polymerization was terminated by charge of methanol. The polymer solution was stabilized with Irganox 1520D, the polymer recovered by steam stripping and dried until a content of residual volatiles < 0.6 % was obtained. The complete data set of the sample is given in table 7.

### Polymerization procedure 4: Example of the Invention fx HEA99

Cyclohexane (amount given in table 1), initial butadiene (29.0 % of amount given in table 1) and styrene (amount given in table 1) were charged to an airfree 5 l reactor and the stirred mixture was heated up to 65 °C. Then *n*-butyl lithium was charged dropwise to react the impurities until the color of the reaction mixture changed to yellowish (titration). Afterwards the recipe amount of initiator (see initiator formation and table 1) corresponding to the target molecular weight of the polymer was charged immediately to start the polymerization. The start time of the charge of the initiator was used as the start time of the polymerization. Parallel with the charge of the initiator the temperature was increased by heating the wall of the reactor to the final polymerization temperature of 100 °C in 15 min. After 15 min from start of the polymerization incremental butadiene (32.9 % of amount given in table 1) was charged over 15 min. After charging was completed the mixture was stirred for further 10 min at 100 °C before the second incremental butadiene (24.1 % of amount given in table 1) was charged over 20 min. The mixture was stirred for further 10 min at 100 °C before the third incremental butadiene (11.5 % of amount given in table 1) was charged over 25 min. The mixture was stirred for further 30 min at 100 °C before *n*-butyl lithium was dosed (amount given in table 1). The mixture was stirred for further 30 min at 100 °C before butadiene was dosed (1.2 % of amount given in table 1) and after 1 min stirring at 100 °C SnCl₄ (amount given in table 1) was charged. The mixture was stirred at 100 °C for further 15 min before residual butadiene was dosed (1.3 % of amount given in table 1). After 5 min stirring at 110 °C **2f** (amount given in table 1) was charged and the mixture was stirred at 100 °C for further 20 min. The polymerization was terminated by charge of methanol. The polymer solution was stabilized with Irganox 1520D, the polymer recovered by steam stripping and dried until a content of residual volatiles < 0.6 % was obtained. The complete data set of the sample is given in table 7.

**Table 1: Polymerization and polymer data**

| | **EA18** | **EA19** | **EA57** | **HEA99** |
|---|---|---|---|---|
| Cyclohexane [g] | 4264 | 4264 | 4232 | 2215 |
| Butadiene [g] | 490 | 490 | 571 | 220 |
| Styrene [g] | 148 | 148 | 63 | 24.6 |
| First Stage Initiator [mmol]¹ | IT 6.37 | IT 6.37 | IT 7.02 | IT 2.70 |
| Second Stage Initiator [mmol]¹ | - | NB 7.71 | - | NB 2.65 |
| Modifier [mmol] | - | - | SnCl₄ 0.53 | SnCl₄ 0.43 |
| | | | **2f** 6.06 | **2f** 6.14 |
| Mn [kg/mol] | 148 | 153 | 150 | 118 |
| Vinyl content [%] | 6.3 | 6.3 | 5.2 | 5.6 |
| Trans content [%]³ | 75.3 | 75.8 | 76.0 | 77.0 |
| Styrene content [%] | 22 | 23.3 | 9.0 | 9.7 |
| M_{L} [MU]² | 44.3 | 43.3 | 52.7 | 44.5 |

| | | | | |
|---|---|---|---|---|
| ¹mmol related to amount of *n*-butyl lithium, ²direct after coagulation, ³based on total polybutadiene fraction, **NB** = n-butyl lithium, **IT** = preformed initiator mixture consisting of **NB** (1 eq), **TOA** (1.33 eq) and **BaDEGEE** (0.33 eq) in cyclohexane, 2f = 3-Methoxy-3,8,8,9,9-pentamethyl-2-oxa-7-thia-3,8-disiladecane | | | | |

Preparation of polymer compositions and the corresponding vulcanizates via 2-step compounding/crosslinking

Polymer compositions according to the invention were prepared using the solution styrene butadiene polymer (SSBR) materials described above. The polymer compositions were compounded by kneading according to the formulations shown in Table 2 in a standard two-step compound recipe with silica as filler in an internal lab mixer comprising a Banbury rotor type with a total chamber volume of 370 cm³.

The reagents used are defined in Table 2. Recipe (A) was used for carbon black (CB) formulations (EA18 and EA19), recipe (B) for silica formulations (EA57 and HEA99).

| **1. Mixing step** | (A) | (B) |
|---|---|---|
| | Amount (phr) | Amount (phr) |
| SSBR | 40¹ | 40 |
| NR (SVR10) | 60 | 60 |
| Ultrasil 7000GR | - | 50 |
| Silane (Si75) | - | 4.31 |
| IRB8 (international ref. carbon black, Sid Richardson) | 50 | 10 |
| Stearic acid | 1.5 | 1.0 |
| Dusantox 6PPD | - | 2 |
| Antilux wax 654 | - | 1.5 |
| Zinc oxide | 3 | 2 |
| Softner (TDAE, Vivatec500) | 5 | 5 |

| **2. Mixing step** | | |
|---|---|---|
| Sulfur | 1.63 | 1.32 |
| Accelerator (TBBS) | 0.93 | 1.42 |
| Accelerator (DPG) | - | 1.42 |

The first mixing step was performed using an initial temperature of 60°C. After adding the polymer composition, the filler and all other ingredients described in the formulations for step 1, the rotor speed of the internal mixer is controlled to reach a temperature range between 145°C - 160°C. The total mixing time for the first step is 7 min (CB) or 8 min (silica). After dumping the compound, the mixture is cooled down and stored for relaxing before adding the curing system in the second mixing step.

The second mixing step was done in the same equipment at an initial temperature of 50°C. The compound from first mixing step, sulphur as vulcanizing agent and the accelerators TBBS were added and mixed for a total time of 3 min.

### Performance of the crosslinked polymer compositions (vulcanizates):

Next, the key performance attributes of the crosslinked polymer compositions (vulcanizates) according to the invention were analysed. The results of the corresponding tests are shown in Table 3.

As shown in Table 3 below, it was found that a polymer composition, comprising the polymer blend according to the invention (example EA19 and HEA99) are characterized by significantly improved tan δ @ 60°C (which is a laboratory predictor for rolling resistance of the tire) in combination with significantly improved abrasion loss (i.e. within the measurement error of the DIN method) and similar mechanical properties (Tensile Strength and Elongation@Break), when compared with a polymer composition, comprising a styrene-butadiene-copolymer without a low molecular weight component (B) (example EA18 and HEA57).

| | **Comp. EA18/NR¹** | **Invention EA19/NR¹** | **Comp. HEA57/NR²** | **Invention HEA99/NR²** |
|---|---|---|---|---|
| **Compound Data** | | | | |
| Compound Mooney [MU] | 48.4 | 50.3 | 63.5 | 68.3 |

| **Curing Characteristics** | | | | |
|---|---|---|---|---|
| tₛ₁ [min] | 6.3 | 6.9 | 3.0 | 2.9 |
| tₛ₂ [min] | 9.3 | 9.5 | 4.3 | 4.0 |
| t10 [min] | 8.7 | 8.9 | 4.1 | 3.8 |
| t25 [min] | 10.7 | 10.6 | 5.5 | 4.9 |
| t50 [min] | 12.3 | 12.3 | 6.3 | 5.5 |
| t90 [min] | 19.2 | 19.1 | 10.9 | 8.9 |
| t95 [min] | 22.2 | 22.3 | 13.8 | 11.5 |

| **Vulcanizate Characteristics**² | | | | |
|---|---|---|---|---|
| DIN Abrasion | 100 | 105 | 100 | 106 |
| Elongation @ break | 100 | 98 | 100 | 98 |
| Tensile Strength | 100 | 97 | 100 | 105 |
| Tanδ @ 60 °C | 100 | 106 | 100 | 125 |

| | | | | |
|---|---|---|---|---|
| ¹formulation in CB, ²formulation in silica, ³Index: percent improvement compared to Comparative Example (= 100), higher is better | | | | |

## Claims

1. Method for the preparation of a synthetic rubber blend, the blend comprising
a high molecular weight diene polymer (A) derived from butadiene monomers and, optionally, alpha olefins and further conjugated diene monomers,
polymer (A) having 55-100 % by weight of units derived from butadiene monomers and 0-45 % by weight of units derived from aromatic vinyl monomers, alpha olefins and further conjugated diene monomers,
polymer (A) further having a number average molecular weight (Mn) of from 50.000 to 1.000.000 g/mol,
wherein 65 % by weight or more of the butadiene monomers are incorporated into the polymer chains in the form of the trans isomer;
and a low molecular weight diene polymer (B) having a number average molecular weight (Mn) of from 250 to 10.000 g/mol,
wherein the method comprises the following steps:
anionically polymerizing butadiene monomers and, optionally, one or more monomers selected from aromatic vinyl monomers, alpha olefins and further conjugated diene momomers in the presence of at least one polymerization initiator in an organic solvent,
wherein the step of polymerizing the butadiene monomers and, optionally, the aromatic vinyl monomers, alpha olefins and further conjugated diene monomers comprises
(i) a first stage of providing butadiene monomers and, optionally, aromatic vinyl monomers,alpha olefins and further conjugated diene monomers, and a first portion of a polymerization initiator comprising an organolithium compound, a group IIa metal salt, and an organoaluminum compound, and polymerizing the butadiene monomer up to a conversion rate of 80 %, preferably 90 %, to give a high molecular weight diene polymer (A), wherein 65% by weight or more of the butadiene monomers are incorporated into the polymer chains in the form of the trans isomer;
and (ii) a subsequent second stage of adding a second portion of a polymerization initiator comprising an organolithium compound
and polymerizing to obtain the blend of the high molecular weight diene polymer (A) and the low molecular weight diene polymer (B).

2. The method according to claim 1, wherein the polymerization initiator used in stage (i) comprises n-butyllithium as the organolithium compound, the barium salt of di(ethyleneglycol)ethyl ether as the group IIa metal salt, and tri-n-octylaluminum as the organoaluminum compound.

3. The method according to any of claims 1 and 2, wherein the butadiene monomers and/or the optional further conjugated diene monomer is selected from 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene, preferably 1,3-butadiene, and/or 2-methyl-1,3-butadiene; and/or wherein the vinyl aromatic monomers being selected from styrene, 2-methylstyrene, 3-methylstyrene, 4-methylstyrene, 2,4-dimethylstyrene, 2,4,6-trimethylstyrene, α-methylstyrene, stilbene, 2,4-diisopropylstyrene,4-tert-butylstyrene, vinyl benzyl dimethylamine, (4-vinylbenzyl)dimethyl aminoethyl ether, N,N-dimethylaminoethyl styrene, N,N-bis-(trialkylsilyl)aminostyrene, tert-butoxystyrene, vinylpyridine and/or divinylbenzene.

4. The method according to any of the preceding claims, wherein polymer (A) and/or polymer (B) are modified by way of addition of and reaction with at least one functionalizing component.

5. The method according to any of the preceding claims, wherein the first and/or the second stage of the step of polymerizing the butadiene monomers and, optionally, the one or more aromatic vinyl monomers, alpha olefins and further conjugated diene monomers is carried out at a temperature of 60-150 °C.

6. Synthetic rubber blend obtainable according to the method of any of claims 1 to 5.

7. Synthetic rubber blend according to claim 6, wherein the blend comprises
(c) 100 parts by weight of a high molecular weight diene polymer (A) having units derived from butadiene monomers and optionally aromatic vinyl monomers, alpha olefins and further conjugated diene monomers, further having a number average molecular weight (Mn) of from 50.000 to 1.000.000 g/mol, and wherein 65 % by weight or more of the diene monomers are incorporated into the polymer chains in the form of the trans isomer;
and
(d) 0,01 to 20 parts by weight of a low molecular weight diene polymer (B) having units derived from butadiene monomers and optionally aromatic vinyl monomers, alpha olefins and further conjugated diene monomers, and further having a number average molecular weight (Mn) of from 250 to 10.000 g/mol.

8. Synthetic rubber blend according to claim 6 or 7, wherein diene polymer (A) has a number average molecular weight (Mn) of from 100.000 to 180.000 g/mol, and/or a weight average molecular weight of from 280.000 to 500.000 g/mol, and/or a polydispersity Mw/Mn of from 2.8-3.8.

9. Rubber composition comprising the blend of any of claims 6 to 8.

10. Rubber composition of claim 9, further comprising one or more additional rubber selected from the group consisting of styrene butadiene rubber, butadiene rubber, synthetic isoprene rubber and natural rubber.

11. Rubber composition of claim 9 or 10, further comprising filler, preferably silica.

12. Method for the preparation of a cross-linked rubber composition, the method comprising the step of adding one or more vulcanizing agent to the synthetic rubber blend according to any of claims 6 to 8 or to the rubber composition according to any of claims 9 to 11 and cross-linking the composition.

13. Cured rubber composition obtainable according to the method of claim 12.

14. Article, comprising a cured rubber composition according to claim 13.

15. Article according to claim 14, wherein the article is a tire, a tire tread, a tire side wall, a conveyer belt, a seal or a hose.

## Patentansprüche

1. Verfahren zur Herstellung einer Synthesekautschukmischung, wobei die Mischung
ein hochmolekulares Dienpolymer (A), das aus Butadienmonomeren und optional α-olefinen und weiteren konjugierten Dienmonomeren erhalten wird,
wobei das Polymer (A) 55-100 Gew.% an Einheiten enthält, die von Butadien abgeleitet sind, und 0-45 Gew.% an Einheiten, die von aromatischen Vinylmonomeren, α-olefinen und weiteren konjugierten Dienmonomeren abgeleitet sind,
wobei das Polymer (A) des Weiteren ein zahlengemitteltes Molekulargewicht (Mn) von 50.000 bis 1.000.000 g/mol aufweist,
wobei 65 Gew.% oder mehr der Butadienmonomere in Form des trans-Isomers in die Polymerketten eingebaut sind;
und ein niedermolekulares Dienpolymer (B) mit einem zahlengemittelten Molekulargewicht (Mn) von 250 bis 10.000 g/mol umfasst,
wobei das Verfahren die folgenden Schritte umfasst:
anionisches Polymerisieren von Butadienmonomeren und optional eines oder mehrerer Monomere, ausgewählt aus aromatischen Vinylmonomeren, α-Olefinen und weiteren konjugierten Dienmonomeren, in Gegenwart mindestens eines Polymerisationsinitiators in einem organischen Lösungsmittel,
wobei der Schritt des Polymerisierens der Butadienmonomere und optional der aromatischen Vinylmonomere, der α-Olefine und der weiteren konjugierten Dienmonomere umfasst
(i) eine erste Stufe des Bereitstellens von Butadienmonomeren und optional aromatischen Vinylpolymeren, α-Olefinen und weiteren konjugierten Dienmonomer und einer ersten Portion eines Polymerisationsinitiators, der eine Organolithiumverbindung, ein Metallsalz der Gruppe IIa und eine Organoaluminiumverbindung umfasst, und des Polymerisierens des Butadienmonomers bis zu einer Konversionsrate von 80%, bevorzugt 90%, um ein hochmolekulares Dienpolymer (A) zu erhalten, wobei 65 Gew.% oder mehr der Butadienmonomere in Form des trans-Isomers in die Polymerketten eingebaut werden;
und (ii) eine darauffolgende zweite Stufe des Zugebens einer zweiten Portion eines Polymerisationsinitiators, der eine Organolithiumverbindung umfasst, und des Polymerisierens, um eine Mischung des hochmolekularen Dienpolymers (A) und des niedermolekularen Dienpolymers (B) zu erhalten.

2. Verfahren gemäß Anspruch 1, wobei der in Stufe (i) verwendete Polymerisationsinitiator n-Butyllithium als Organolithiumverbindung, das Bariumsalz des Di(ethylenglycol)ethylethers als Metallsalz der Gruppe IIa, und Tri-n-octylaluminium als Organoaluminiumverbindung umfasst.

3. Verfahren gemäß einem der Ansprüche 1 und 2, wobei die Butadienmonomere und/oder das optionale weitere konjugierte Dienmonomer ausgewählt ist aus 1,3-Butadien, 2-Alkyl-1,3-butadien, 2-Methyl-1,3-butadien, 2,3-Dimethyl-1,3-butadien, 1,3-Pentadien, 2,4-Hexadien, 1,3-Hexadien, 1,3-Heptadien, 1,3-Octadien, 2-Methyl-2,4-pentadien, Cyclopentadien, 2,4-Hexadien und/oder 1,3-Cyclooctadien, bevorzugt 1,3-Butadien und/oder 2-Methyl-1,3-butadien; und/oder wobei die aromatischen Vinylmonomere ausgewählt sind aus Styrol, 2-Methylstyrol, 3-Methylstyrol, 4-Methylstyrol, 2,4-Dimethylstyrol, 2,4,6-Trimethylstyrol, α-Methylstyrol, Stilben, 2,4-Diisopropylstyrol, 4-*tert*-Butylstyrol, Vinylbenzyldimethylamin, (4-Vinylbenzyl)-dimethylaminoethylether, *N,N*-Dimethylaminoethylstyrol, *N,N*-Bis(trialkylsilyl)-aminostyrol, *tert*-Butoxystyrol, Vinylpyridin und/oder Divinylbenzol.

4. Verfahren gemäß einem der vorangehenden Ansprüche, wobei Polymer (A) und/oder Polymer (B) durch Zugabe von und Reaktion mit mindestens einer funktionalisierenden Komponente modifiziert werden.

5. Verfahren gemäß einem der vorangehenden Ansprüche, wobei die erste und/oder die zweite Stufe des Schritts des Polymerisierens der Butadienmonomere und optional des einen oder der mehreren aromatischen Vinylpolymere, α-Olefine und weiteren konjugierten Dienmonomere bei einer Temperatur von 60-150 °C durchgeführt wird.

6. Synthesekautschukmischung, erhältlich nach dem Verfahren gemäß einem der Ansprüche 1 bis 5.

7. Synthesekautschukmischung gemäß Anspruch 6, wobei die Mischung umfasst:
(c) 100 Gewichtsteile eines hochmolekularen Dienpolymers (A), das Einheiten enthält, die von Butadienmonomeren und optional aromatischen Vinylmonomeren, α-olefinen und weiteren konjugierten Dienmonomeren abgeleitet sind, das des Weiteren ein zahlengemitteltes Molekulargewicht (Mn) von 50.000 bis 1.000.000 g/mol aufweist, und wobei 65 Gew.% oder mehr der Dienmonomere in Form des trans-Isomers in die Polymerketten eingebaut sind;
und
(d) 0,01 bis 20 Gewichtsteile eines niedermolekularen Dienpolymers (B), das Einheiten enthält, die von Butadienmonomeren und optional aromatischen Vinylmonomeren, α-Olefinen und weiteren konjugierten Dienmonomeren abgeleitet sind, und das des Weiteren ein zahlengemitteltes Molekulargewicht (Mn) von 250 bis 10.000 g/mol aufweist.

8. Synthesekautschukmischung gemäß Anspruch 6 oder 7, wobei Dienpolymer (A) ein zahlengemitteltes Molekulargewicht (Mn) von 100.000 bis 180.000 g/mol und/oder ein gewichtsgemitteltes Molekulargewicht von 280.000 bis 500.000 g/mol und/oder eine Polydispersität Mw/Mn von 2,8 bis 3,8 aufweist.

9. Kautschukzusammensetzung, umfassend die Mischung gemäß einem der Ansprüche 6-8.

10. Kautschukzusammensetzung gemäß Anspruch 9, des Weiteren umfassend einen oder mehrere zusätzliche Kautschuke ausgewählt aus der Gruppe bestehend aus Styrol-Butadien-Kautschuk, Butadien-Kautschuk, synthetischem Isopren-Kautschuk und Naturkautschuk.

11. Kautschukzusammensetzung gemäß Anspruch 9 oder 10, des Weiteren umfassend einen Füllstoff, bevorzugt Siliziumdioxid.

12. Verfahren zur Herstellung einer quervernetzen Kautschukzusammensetzung, wobei das Verfahren den Schritt des Zugebens eines oder mehrerer Vulkanisierungsmittel zu der Synthesekautschukmischung gemäß einem der Ansprüche 6 bis 8 oder zu der Kautschukzusammensetzung gemäß einem der Ansprüche 9 bis 11 und das Quervernetzen der Zusammensetzung umfasst.

13. Gehärtete Kautschukzusammensetzung, erhältlich nach dem Verfahren gemäß Anspruch 12.

14. Gegenstand, umfassend eine gehärtete Kautschukzusammensetzung gemäß Anspruch 13.

15. Gegenstand gemäß Anspruch 14, wobei der Artikel ein Reifen, eine Reifenlauffläche, eine Reifenseitenwand, ein Förderband, eine Dichtung oder ein Schlauch ist.

## Revendications

1. Procédé de préparation d'un mélange de caoutchouc synthétique, le mélange comprenant
un polymère de diène de haut poids moléculaire (A) dérivé de monomères de butadiène et, facultativement, d'alpha oléfines et d'autres monomères de diène conjugués,
un polymère (A) ayant de 55 à 100 % en poids d'unités dérivées de monomères de butadiène et de 0 à 45 % en poids d'unités dérivées de monomères de vinyle aromatiques, d'alpha oléfines et d'autres monomères de diène conjugués,
un polymère (A) ayant en outre un poids moléculaire moyen en nombre (Mn) de 50 000 à 1 000 000 g/mol,
dans lequel 65 % en poids ou plus des monomères de butadiène sont incorporés dans les chaînes polymères sous la forme de l'isomère trans ;
et un polymère de diène de bas poids moléculaire (B) ayant un poids moléculaire moyen en nombre (Mn) de 250 à 10 000 g/mol,
dans lequel le procédé comprend les étapes suivantes :
polymérisation anionique de monomères de butadiène et, facultativement, d'un ou plusieurs monomères sélectionnés à partir de monomères de vinyle aromatiques, d'alpha oléfines et d'autres monomères de diène conjugués en présence d'au moins un initiateur de polymérisation dans un solvant organique,
dans lequel l'étape de polymérisation des monomères de butadiène et, facultativement, des monomères de vinyle aromatiques, des alpha oléfines et d'autres monomères de diène conjugués comprend
(i) un premier stade de fourniture de monomères de butadiène et, facultativement, de monomères de vinyle aromatiques, d'alpha oléfines et d'autres monomères de diène conjugués, et d'une première portion d'un initiateur de polymérisation comprenant un composé d'organolithium, un sel de métal du groupe IIa, et un composé d'organoaluminium, et de polymérisation du monomère de butadiène jusqu'à un taux de conversion de 80 %, de préférence 90 %, pour donner un polymère de diène de haut poids moléculaire (A), dans lequel 65 % en poids ou plus des monomères de butadiène sont incorporés dans les chaînes polymères sous la forme de l'isomère trans ;
et (ii) un second stade ultérieur d'addition d'une seconde portion d'un initiateur de polymérisation comprenant un composé d'organolithium et de polymérisation pour obtenir le mélange du polymère de diène de haut poids moléculaire (A) et du polymère de diène de bas poids moléculaire (B).

2. Procédé selon la revendication 1, dans lequel l'initiateur de polymérisation utilisé dans le stade (i) comprend le n-butyllithium en tant que le composé d'organolithium, le sel de baryum de di(éthylèneglycol)éthyl éther en tant que le sel de métal du groupe IIa, et le tri-n-octylaluminium en tant que le composé d'organoaluminium.

3. Procédé selon l'une quelconque des revendications 1 et 2, dans lequel les monomères de butadiène et/ou l'autre monomère de diène conjugué facultatif est sélectionné à partir du 1,3-butadiène, du 2-alkyl-1,3-butadiène, du 2-méthyl-1,3-butadiène, du 2,3-diméthyl-1,3-butadiène, du 1,3-pentadiène, du 2,4-hexadiène, du 1,3-hexadiène, du 1,3-heptadiène, du 1,3-octadiène, du 2-méthyl-2,4-pentadiène, du cyclopentadiène, du 2,4-hexadiène et/ou du 1,3-cyclooctadiène, de préférence du 1,3-butadiène, et/ou du 2-méthyl-1,3-butadiène ; et/ou dans lequel les monomères aromatiques de vinyle étant sélectionnés à partir du styrène, du 2-méthylstyrène, du 3-méthylstyrène, du 4-méthylstyrène, du 2,4-diméthylstyrène, du 2,4,6-triméthylstyrène, de l'a-méthylstyrène, du stilbène, du 2,4-diisopropylstyrène, du 4-tert-butylstyrène, de la vinyl benzyl diméthylamine, du (4-vinylbenzyl)diméthyl aminoéthyl éther, du N,N-diméthylaminoéthyl styrène, du N,N-bis-(trialkylsilyl)aminostyrène, du tert-butoxystyrène, de la vinylpyridine et/ou du divinylbenzène.

4. Procédé selon l'une quelconque des revendications précédentes, dans lequel le polymère (A) et/ou le polymère (B) sont modifiés au moyen de l'addition de et de la réaction avec au moins un composant de fonctionnalisation.

5. Procédé selon l'une quelconque des revendications précédentes, dans lequel le premier et/ou le second stade de l'étape de polymérisation des monomères de butadiène et, facultativement, des un ou plusieurs monomères de vinyle aromatiques, d'alpha oléfines et d'autres monomères de diène conjugués est réalisé à une température de 60 à 150°C.

6. Mélange de caoutchouc synthétique pouvant être obtenu selon le procédé selon l'une quelconque des revendications 1 à 5.

7. Mélange de caoutchouc synthétique selon la revendication 6, dans lequel le mélange comprend
(c) 100 parties en poids d'un polymère de diène de haut poids moléculaire (A) ayant des unités dérivées de monomères de butadiène et facultativement de monomères de vinyle aromatiques, d'alpha oléfines et d'autres monomères de diène conjugués, ayant en outre un poids moléculaire moyen en nombre (Mn) de 50 000 à 1 000 000 g/mol, et dans lequel 65 % en poids ou plus des monomères de diène sont incorporés dans les chaînes polymères sous la forme de l'isomère trans ;
et
(d) 0,01 à 20 parties en poids d'un polymère de diène de bas poids moléculaire (B) ayant des unités dérivées de monomères de butadiène et facultativement de monomères de vinyle aromatiques, d'alpha oléfines et d'autres monomères de diène conjugués, et ayant en outre un poids moléculaire moyen en nombre (Mn) de 250 à 10 000 g/mol.

8. Mélange de caoutchouc synthétique selon la revendication 6 ou 7, dans lequel le polymère de diène (A) a un poids moléculaire moyen en nombre (Mn) de 100 000 à 180 000 g/mol, et/ou un poids moléculaire moyen en poids de 280 000 à 500 000 g/mol, et/ou une polydispersité Mw/Mn de 2,8 à 3,8.

9. Composition de caoutchouc comprenant le mélange selon l'une quelconque des revendications 6 à 8.

10. Composition de caoutchouc selon la revendication 9, comprenant en outre un ou plusieurs caoutchoucs supplémentaires sélectionnés à partir du groupe constitué par du caoutchouc de styrène butadiène, du caoutchouc de butadiène, du caoutchouc d'isoprène synthétique et du caoutchouc naturel.

11. Composition de caoutchouc selon la revendication 9 ou 10, comprenant en outre une charge, de préférence de la silice.

12. Procédé de préparation d'une composition de caoutchouc réticulée, le procédé comprenant l'étape d'addition d'un ou plusieurs agents de vulcanisation au mélange de caoutchouc synthétique selon l'une quelconque des revendications 6 à 8 ou à la composition de caoutchouc selon l'une quelconque des revendications 9 à 11 et de réticulation de la composition.

13. Composition de caoutchouc durcie pouvant être obtenue selon le procédé de la revendication 12.

14. Article, comprenant une composition de caoutchouc durcie selon la revendication 13.

15. Article selon la revendication 14, dans lequel l'article est un pneu, une bande de roulement de pneu, un flanc de pneu, une bande de transport, un joint ou un tuyau.
